# EUROPÄISCHE PATENTSCHRIFT

(11) **EP 2 569 354 B1**
(45) Veröffentlichungstag und Bekanntmachung des Hinweises auf die Patenterteilung: **22.07.2015**
(21) Anmeldenummer: 11718988.6
(22) Anmeldetag: 06.05.2011
(51) Int. Cl.: C08K 3/04, C08K 3/38, C08L 69/00

(54) **POLYMER-ZUSAMMENSETZUNG MIT WÄRME-ABSORBIERENDEN EIGENSCHAFTEN UND VERBESSERTEN FARBEIGENSCHAFTEN**
POLYMER COMPOSITION HAVING HEAT-ABSORBENT PROPERTIES AND IMPROVED DYEING PROPERTIES
COMPOSITION POLYMÈRE AYANT DES PROPRIÉTÉS D'ABSORPTION DE CHALEUR ET DES PROPRIÉTÉS CHROMATIQUES AMÉLIORÉES

(30) Priorität: 10.05.2010 IT RM20100225
(43) Veröffentlichungstag der Anmeldung: 20.03.2013
(73) Patentinhaber: Bayer Intellectual Property GmbH, 40789 Monheim (DE)
(72) Erfinder: MEYER, Alexander, 40489 Düsseldorf (DE); STOLLWERCK, Gunther, 47802 Krefeld (DE); GESTERMANN, Sven, 51375 Leverkusen (DE); HORN, Klaus, 41540 Dormagen (DE); MEYER ZU BERSTENHORST, Birgit, 51375 Leverkusen (DE); REICHENAUER, Jörg, 47802 Krefeld (DE); SCAGNELLI, Andrea, I-24040 Bonate Sotto (BG) (IT); MALVESTITI, Gianmaria, I-24041 Brembate (BG) (IT); TIRONI, Massimo, I-24048 Treviolo (BG) (IT)
(74) Vertreter: BIP Patents
(86) Internationale Anmeldenummer: PCT/EP2011/057283
(87) Internationale Veröffentlichungsnummer: WO 2011/141369

(56) Entgegenhaltungen:
- US-A1- 2007 015 081
- US-A1- 2009 136 730

## Beschreibung

Die Erfindung betrifft ein Fertigteil aus einer Infrarotstrahlung-(IR)-absorbierenden Polymer-Zusammensetzung enthaltend Polycarbonat einen anorganischen Infrarotabsorber, nachfolgend auch als IR-Absorber bezeichnet, und mindestens einen nanoskaligen Ruß sowie die Verwendung eines nanoskaligen Rußes.

Insbesondere betrifft die vorliegende Erfindung die Reduzierung unerwünschter Streueffekte, hervorgerufen durch anorganische IR-Absorber auf Boridbasis sowie die Verwendung der erfindungsgemäßen Polymer-Zusammensetzung enthaltend diese IR-Absorber zur Herstellung von Scheiben für den Einsatz in Gebäuden, Kraftfahrzeugen und Schienen- oder Luftfahrzeugen.

Verscheibungen aus Zusammensetzungen, enthaltend transparente thermoplastische Polymere wie z.B. Polycarbonat, bieten für den Einsatz im Fahrzeugbereich und für Gebäude viele Vorteile gegenüber herkömmlichen Verscheibungen aus Glas. Hierzu zählen z.B. erhöhte Bruchsicherheit und/oder Gewichtsersparnis, die im Fall von Automobilverscheibungen eine höhere Insassensicherheit bei Verkehrsunfällen und einen niedrigeren Kraftstoffverbrauch ermöglichen. Schließlich lassen transparente Werkstoffe, die transparente thermoplastische Polymere enthalten, aufgrund der einfacheren Formbarkeit eine wesentlich größere Designfreiheit zu.

Nachteilig ist allerdings, daß die hohe Wärmedurchlässigkeit (d.h. Durchlässigkeit für IR-Strahlung) von transparenten thermoplastischen Polymeren bei Sonneneinwirkung zu einer unerwünschten Erwärmung im Inneren von Fahrzeugen und Gebäuden führt. Die erhöhten Temperaturen im Innenraum vermindern den Komfort für die Insassen bzw. Bewohner und können erhöhte Anforderungen an die Klimatisierung nach sich ziehen, die wiederum den Energieverbrauch steigern und so die positiven Effekte wieder aufheben. Um dennoch der Forderung nach einem geringen Energieverbrauch verbunden mit einem hohen Insassenkomfort Rechnung zu tragen, sind Scheiben erforderlich, die mit einem entsprechenden Wärmeschutz ausgerüstet sind. Dies gilt insbesondere für den Automobilbereich.

Wie seit langem bekannt ist, entfällt der größte Teil der solaren Energie neben dem sichtbaren Bereich des Lichts zwischen 400 nm und 750 nm auf den Bereich des nahen Infrarots (NIR) zwischen 750 nm und 2500 nm. Eindringende Sonnenstrahlung wird z.B. im Inneren eines Automobils absorbiert und als langwellige Wärmestrahlung mit einer Wellenlänge von 5 µm bis 15 µm emittiert. Da in diesem Bereich übliche Verscheibungsmaterialien -insbesondere im sichtbaren Bereich transparente thermoplastische Polymere - nicht transparent sind, kann die Wärmestrahlung nicht nach außen abstrahlen. Man erhält einen Treibhauseffekt und der Innenraum heizt sich auf. Um diesen Effekt möglichst klein zu halten, sollte daher die Transmission der Verscheibungen im NIR möglichst minimiert werden. Übliche transparente thermoplastische Polymere wie z.B. Polycarbonat sind jedoch sowohl im sichtbaren Bereich, als auch im NIR transparent.

Es werden daher z.B. Zusätze benötigt, welche im NIR eine möglichst geringe Transparenz aufweisen ohne die Transparenz im sichtbaren Bereich des Spektrums nachteilig zu beeinflussen.

Unter den transparenten thermoplastischen Kunststoffen sind Polymere basierend auf Polymethylmethacrylat (PMMA) und Polycarbonat besonders gut für die Verwendung als Verscheibungsmaterial geeignet. Aufgrund der hohen Zähigkeit besitzt insbesondere Polycarbonat ein sehr gutes Eigenschaftsprofil für derartige Einsatzzwecke.

Um diesen Kunststoffen Infrarot-absorbierende Eigenschaften zu verleihen werden daher entsprechende Infrarotabsorber als Additive eingesetzt. Insbesondere sind hierfür IR-Absorber-Systeme interessant, die über ein breites Absorptionsspektrum im NIR-Bereich (Nahes Infrarot, 750 nm - 2500 nm) bei gleichzeitig geringer Absorption im sichtbaren Bereich (geringe Eigenfarbe) verfügen. Die entsprechenden Polymer-Zusammensetzungen sollen darüber hinaus eine hohe Thermostabilität sowie eine ausgezeichnete Lichtstabilität aufweisen.

Es ist eine Vielzahl von IR-Absorbern auf Basis organischer oder anorganischer Materialien bekannt, die in transparenten Thermoplasten eingesetzt werden können. Eine Auswahl derartiger Materialien ist z.B. in J. Fabian, H. Nakazumi, H. Matsuoka, Chem. Rev. 92, 1197 (1992), in US-A 5,712,332 oder JP-A 06240146 beschrieben.

IR-absobierende Additive auf Basis organischer Materialien haben allerdings häufig den Nachteil, dass sie eine geringe Stabilität gegenüber thermischer Belastung oder Bestrahlung aufweisen. So sind viele dieser Additive nicht genügend wärmestabil, um in transparente Thermoplaste eingearbeitet zu werden, da bei Ihrer Verarbeitung Temperaturen bis zu 350°C erforderlich sind. Darüber hinaus sind die Verscheibungen im Gebrauch oft über längere Zeiträume Temperaturen von mehr als 50°C, bedingt durch die Sonneneinstrahlung, ausgesetzt, was zur Zersetzung oder zum Abbau der organischen Absorbentien führen kann.

Ferner weisen die organischen IR-Absorber häufig nicht eine genügend breite Absorptionsbande im NIR-Bereich auf, so dass ihr Einsatz als IR-Absorber in Verscheibungsmaterialien ineffizient ist, wobei zusätzlich oft noch eine starke Eigenfarbe dieser Systeme auftritt, die in der Regel unerwünscht ist.

IR-absorbierende Additive auf Basis anorganischer Materialien sind im Vergleich zu organischen Additiven häufig deutlich stabiler. Auch ist der Einsatz dieser Systeme oft ökonomischer, da sie in den meisten Fällen ein deutlich günstigeres Preis/Leistungsverhältnis aufweisen. So haben Materialien auf Basis feinteiliger Boride, wie z.B. Lanthanhexaborid, sich als effiziente IR-Absorber erwiesen, da sie über eine breite Absorptionsbande im IR-Bereich verbunden mit einer hohen Thermostabilität aufweisen.

IR-absorbierende Additive aus der Gruppe der Boride sind aufgrund der oben beschriebenen Vorteile für transparente Thermoplaste wie Polymethylmathacrylat und Polycarbonat geeignet. Allerdings zeigte sich, dass diese Additive in transparenten thermoplastischen Zusammensetzungen zu unerwarteten Farbeindrücken unabhängig von Ihrer Eigenfarbe führen.

Der Farbeindruck eines nicht transparenten Gegenstandes ist auf das reflektierte Licht zurückzuführen. Ein Gegenstand, welcher z. B. die langwelligen Bestandteile des Lichts absorbiert, erscheint blau, da die verbleibenden kürzer welligen Anteile des Spektrums remittiert werden. Diese Anmeldung betrifft jedoch transparente Gegenstände, wie z.B. Fensterscheiben. Unter transparenten Gegenständen sind an dieser Stelle Körper gemeint, die eine Transmission von mindesten 6 % und eine Trübung von weniger als 3 %, bevorzugt weniger als 2,5 %, weiter bevorzugt weniger als 2,0 %, aufweisen. Bei transparenten Körpern steht im Vergleich zu nicht transparenten Gegenständen normalerweise nicht die remittierte sondern die transmittierte Farbe im Vordergrund.

Der Gegenstand wirkt also wie ein Farbfilter. Um die Transparenz der Scheibe nicht zu beeinträchtigen, kommen bevorzugt Farbmittel zum Einsatz, die sich in der Polymermatrix lösen oder aber eine so geringe Partikelgröße aufweisen, daß sie keine Trübung verursachen, wobei keine Trübung im Sinne der vorliegenden Erfindung eine Trübung von weniger als 3 % bei gegebener Schichtdicke bedeutet, gemessen gemäß ASTM D1003.

Tatsächlich führen die eingesetzten IR-Absorberpartikel auf Boridbasis nicht zu einer Trübung des entsprechenden Verscheibungselements (Trübung <3%).

Allerdings stellte sich heraus, dass diese Partikel, deren Größe bevorzugt im Nanometerbereich liegt, ab einer gewissen Konzentrationen Streueffekte in der sie einbettenden Matrix unabhängig von der Art und sonstigen Eigenschaften der Partikel erzeugen können. Während diese Streuung die Transmission und damit die Transparenz des Artikels nur unmerklich beeinflußt, wird jedoch der Farbeindruck des Artikels durch das gestreute Licht, insbesondere in Abhängigkeit vom Betrachtungswinkel, z.T. stark verändert.

Die IR-absorbierenden Additive aus der Gruppe der Boride führen folglich im Fertigteil, also z.B. in einer transparenten Scheibe, unter bestimmten Lichtbedingungen und Beobachtungswinkeln zu unerwünschten Farbreflexen. So zeigen entsprechende Scheiben je nach eingesetzter Konzentration des anorganischen IR-Absorbers einen bläulichen bis violetten Schimmer. Dieser Farbeindruck resultiert wie beschrieben nicht von der Farbe der gewählten zugesetzten Pigmente und Absorber, sondern ist auf Streueffekte der Nanopartikel zurückzuführen, die insbesondere bei Beobachtungswinkeln zwischen 1 und 60° zu beobachten sind. Durch diese Streuung kann der Gesamt-Farbeindruck des entsprechenden Artikels, z.B. ein Fahrzeug oder ein Gebäude, negativ beeinflusst werden.

Der Streueffekt wird wie beschrieben häufig als eine bläulich-violetten Farbe empfunden. Wünschenswert ist häufig ein neutraler Farbeindruck, d.h., daß der natürlichen Farbeindruck nicht durch Streueffekte gestört wird. Dass heißt die durch den Streueffekt hervorgerufene Farbe muß einerseits relativ nahe am Unbuntpunkt sein und andererseits nahe an der Eigenfarbe des Bauteils sein.

Es muss betont werden, dass dieser Farbeffekt nicht durch die normale absorbierte bzw. transmittierte Farbe hervorgerufen wird. Dieses Phänomen wird nur durch gestreutes Licht verursacht. Normalerweise tragen Farbstoffe oder Farbpigmente nicht zu diesem Farbeffekt bei. Nur bestimmte Additive, wie z.B. die nanoskaligen Borid-basierten IR-Absorber, verursachen diesen Effekt. Ferner muss darauf hingewiesen werden, dass der Streueffekt nur unter bestimmten Lichtverhältnissen und definierten Betrachtungswinkeln ausgeprägt ist. Dies ist z.B. der Fall wenn der Artikel - bevorzugt eine Scheibe - unter guten Lichtverhältnissen, d.h. bei Sonnenbestrahlung und bei Beobachtungswinkeln zwischen 1 und 60° betrachtet wird.

Die bläuliche Streuung wird durch das IR-Additiv, welches aus feinen Partikeln besteht, hervorgerufen. Diese Partikel, die im Durchschnitt eine Größe, welche sich z.B. mittels TEM (Transmissionselektronenmikroskopie) ermittelt lässt, von bevorzugt kleiner 200 nm, insbesondere bevorzugt kleiner 100 nm aufweisen, verursachen einen Streueffekt und können somit auch zu unerwünschten Farbreflexionen führen. Um diesen Effekt zu minimieren, könnte versucht werden, den Größendurchmesser der Partikel zu verringern oder die Menge der Partikel in der Matrix zu begrenzen. Dies ist allerdings aufwendig, da die Partikel sehr fein gemahlen werden müssen und die Gefahr einer Reaglomeration besteht bzw. bei einer zu geringen Partikelkonzentration der gewünschte Effekt nicht mehr erzielt werden kann.

Es ist bekannt, dass feinteilige Partikel eine sogenannte Raleighstreuung verursachen können. Diese Rayleighstreuung ist z.B. in C.F. Bohren, D. Huffman, Absorption and scattering of light by small particles, John Wiley, New York 1983 beschrieben. Das Streuverhalten von Nanopartikeln auf Boridbasis ist bislang nicht beschrieben worden. Die Konzentrationsbereiche, in denen es zu den beschriebenen farblichen Streueffekten kommt, waren bislang ebenfalls nicht bekannt. Maßnahmen, die zur Abschwächung des beschriebenen Effektes dienen, waren aus dem derzeitigen Stand der Technik nicht offensichtlich.

Weiterhin sind thermoplastische Formmassen bekannt, die sowohl IR-Absorber als auch Farbpigmente, unter anderem Ruße, enthalten, um sowohl die Wärme-absorbierenden Eigenschaften als auch die Farbgebung zu beeinflussen. Maßnahmen zur Reduktion der von IR-absorbierenden Partikeln auf Boridbasis verursachten Streustrahlung sind jedoch in der Literatur ebensowenig beschrieben wie dieser unerwünschte Effekt.

Zusammensetzungen auf Basis von Polycarbonat enthaltend anorganische IR-Absorber auf Boridbasis sind in verschiedenen Publikationen beschrieben worden.

In DE 10392543 A1 werden transparente Wärmewellen-Abschirmfolien beschrieben, die feine Teilchen aus Hexaborid enthalten. Demgegenüber betrifft die vorliegende Erfindung Zusammensetzungen enthaltend spezielle Kombinationen von anorganischen IR-Absorber und anorganischem Pigment zur Reduktion von Streueffekten.

Die US 2004/0028920 beschreibt Masterbatche enthaltend anorganische IR-Absorber auf Boridbasis zur Herstellung von Formteilen. Die US 2004/0028920 erwähnt weder Streueffekte noch beschreibt sie Zusammensetzungen, die diesen Effekt reduzieren würden. Die Verwendung von Ruß wird in dieser Anmeldung im allgemeinen Teil lediglich als ein Mittel zur Farbeinstellung, also als Farbmittel, beschrieben.

In EP 1 559 743 werden Polymer-Zusammensetzungen enthaltend anorganische IR-Absorber in Kombination mit organischen UV-Absorbern beschrieben. Diese Anmeldung beschreibt jedoch nicht den in der vorliegenden Erfindung beschriebenen Streueffekt. Die EP 1 559 743 gibt keine Hinweise, wie der Streueffekt reduziert werden kann.

Aus der WO 2007/008476 A1 sind Formmassen bekannt, die IR-Absorber auf Borid-Basis und spezielle Ruße enthalten, wobei durch die Kombination dieser Komponenten ein synergistischer Effekt hinsichtlich der IR-absorbierenden Eigenschaften erzielt werden soll. Diese Anmeldung macht jedoch keine Angaben zu dem hier beschriebenen Effekt und gibt keinerlei Hinweise wie das in der vorliegenden Anmeldung beschriebene Problem zu lösen ware. Die WO 2007/008476 bezieht sich auf Materialien, die insbesondere für Brillen geeignet sind. Die dort verwendeten Konzentrationen von Farbmitteln, anorganischen IR-Absorbern und nanoskaligen anorganischen Pigmenten sind jedoch völlig verschieden zu denen, die in der vorliegenden Erfindung zur Lösung des beschriebenen Problems in Verscheibungen, wie Automobil- oder Architekturverscheibungen, eingesetzt werden.

Die EP 1865027 A1 beschreibt Polymer-Zusammensetzungen aus speziellen Polycarbonaten, die zusätzlich Lanthanhexaborid als IR-Absorber enthalten. EP 1865027 beschreibt weder das in der vorliegenden Erfindung beschriebene Problem noch kann der Fachmann erkennen, wie das Problem zu lösen wäre.

In keinem der zuvor genannte Dokumente werden Streu- bzw. Reflexionseffekte anorganischer IR-absorber in transparenten Thermoplasten und die daraus resultierenden Probleme beschrieben und somit auch keine Lösung für dieses Problem nahegelegt.

Die Aufgabe der vorliegenden Erfindung war somit die Bereitstellung von transparenten Polymerzusammensetzungen mit keiner oder geringer Trübung, einer guten IR-Absorption und minimierten Farbeffekten durch Streuung, die nicht die Nachteile der aus dem Stand der Technik bekannten Zusammensetzungen aufweisen.

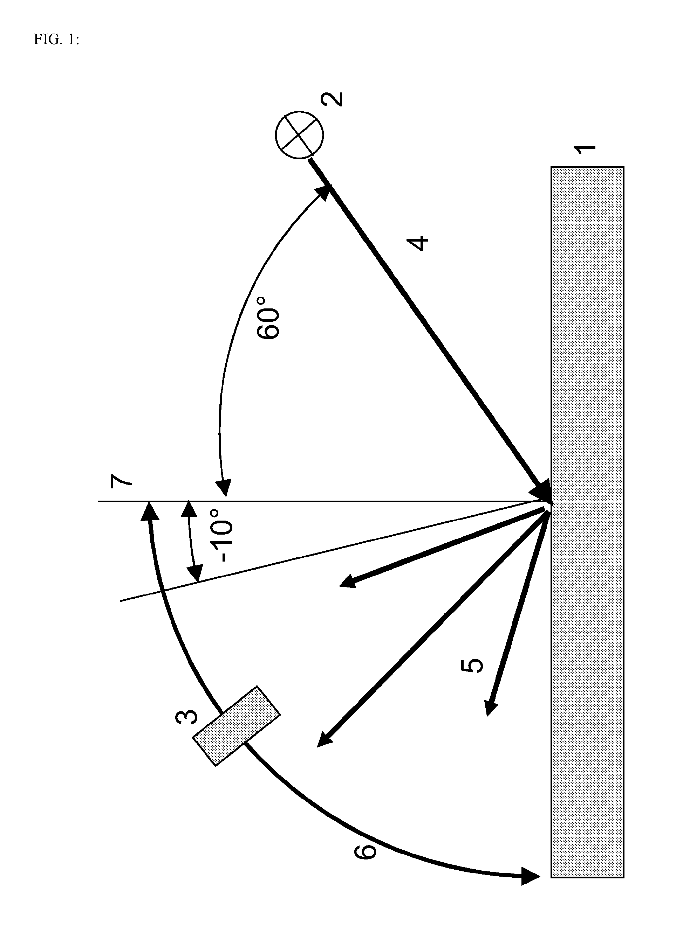

Zur Erfassung und Messung der Streueffekte werden Prüfkörper unter einem Einfallswinkel von 60° gegenüber der Vertikalen mit einer weißen Punktlichtquelle mit einem geringem Öffnungswinkel von unter 2° beleuchtet und die Streuung unter einem Ausfallswinkel von 30° bis - 80° gegenüber der Vertikalen gemessen (Vgl. FIG. 1). Ferner werden die CIELAB Farbkoordinaten L*, a*, b* mit Lichtart D65 und 10°-Beobachter nach ASTM E 308 berechnet. Dieses Farbsystem ist z.B. in Manfred Richter: Einführung in die Farbmetrik. 1984 ISBN 3-11-008209-8 beschrieben. Für die Evaluation der Farbe wird der b* Wert beim Ausfallswinkel von - 10° verwendet. Dieser b*-Wert wird nachfolgend als b* (60°) bezeichnet, wobei sich der Wert von 60° auf den Einfallswinkel bezieht.

Die Messungen wurden mit einem Goniophotometer "Gon360-105" (Gon360 mit Simultanspektrometer CAS 140) der Firma Instrument Systems durchgeführt. Der Messaufbau ist in Abb. 1 gezeigt, wobei
- 1: Probe,
- 2: Weißlichtquelle,
- 3: Detektor mit Farbkoordinatenauswertung,
- 4: Eingestrahltes Licht unter 60° gegenüber normal (der Senkrechten),
- 5: Gestreutes und reflektiertes Licht,
- 6: Winkelbereich, in welchem der Detektor die Farbe misst, und
- 7: Senkrechte Einfallsrichtung (Normalrichtung)
bedeuten.

Darüber hinaus wird die hemispärische Reflexion des Prüfkörpers nach ASTM E 1331 gemessen und die CIELAB Farbkoordinaten L*, a*, b* mit Lichtart D65 und 10°-Beobachter nach ASTM E 308 berechnet. Der entsprechende b*-Wert wird nachfolgend mit b*(hemisphärisch) bezeichnet.

Ein Maß für die Größe des Streueffektes ist also die Messung des b*-Wertes in Reflexion (b* (60°)), bei welcher das gestreute Licht gemessen wird. Je näher der b* (60°) an Null liegt, desto geringer ist die Reflexion im blauen Bereich.

Der b* (60°) Wert des reflektierten Lichts bei -10° Ausfallswinkel der erfindungsgemäßen Formkörper liegt vorzugsweise im Bereich von -2.5 bis 0,0, weiter bevorzugt von -2,3 bis 0,0.

Die Grenze von -2.5 bzw. -2,3 für b* (60°) kommt aus der Anforderung heraus, dass für Autoscheiben eine möglichst neutralgraue Farbe gefordert ist, die Nanoteilchen aber immer eine bläuliche Streuung hervorrufen.

Der Absolutwert des Wertes Δb*, berechnet aus der Differenz von b*(60°) und der hemisphärischen Reflexion b*(hemisphärisch), ist bei erfindungsgemäßen Formkörpern kleiner als 1,0.

Die Grenze von Δb* < 1,0 ergibt sich durch den für das menschliche Auge erfassbaren Farbunterschied von Delta E (berechnet nach DIN 6174), der kleiner als 1,0 ist. Da es sich bei dieser Streuung im wesentlichen um einen bläuliche Streuung handelt, wird hier die Rechnung vereinfacht auf die Differenz Δb*, die sich auf den Blauanteil des Lichts bezieht.

Bei der Untersuchung des Streuungsverhaltens stellte sich heraus, dass die unerwünschten Streuungseffekte stark von der Konzentration des Borid-basierten IR-Absorbers in der Polymermatrix abhängig sind.

Überraschenderweise zeigte sich, dass der Anstieg der Streustrahlung, gemessen als b* (60°)-Wert, bezogen auf die eingesetzte IR-Absorber-Konzentration nicht linear verläuft. So ist im höheren Konzentrationsbereich ab 0,01000 Gew.-% (Borid-Konzentration) die relative Zunahme der Streustrahlung geringer als im mittleren Konzentrationsbereich von 0,00100 Gew.-% - 0,00500 Gew.-%. So ist also im Bereich von 0,00100 Gew.-% bis 0,00500 Gew.-% eine starke Zunahme der Streustrahlung zu beobachten, während dieser Anstieg bei Konzentrationen oberhalb von 0,01000 % überraschenderweise abnimmt.

Die Aufgabe der vorliegenden Erfindung wird daher durch Zusammensetzungen enthaltend Borid in einem Konzentrationsbereich von 0,00270 Gew.-% - 0,00800 Gew.-%, in dem die relative Zunahme der Streustrahlung, gemessen als b* (60°), mit der Boridkonzentration stark ansteigt, in Verbindung mit einem anorganischen nanoskaligen Pigment, bevorzugt einem nanoskaligen Ruß, gelöst.

Überraschenderweise zeigte sich, dass nanoskalige Ruße den unerwünschten Streueffekt vermindern ohne die Transparenz deutlich zu beeinflussen und ohne den Gesamtfarbeindruck negativ zu verändern (neutraler Farbeindruck).

Andere Pigmente und Farbstoffe sind hingegen weniger effektiv oder unwirksam bzw. verfälschen den ursprünglichen Farbeindruck oder sind, wie organische Farbmittel, nicht langzeitstabil und können so zu unerwünschten Farbeffekten führen. Zudem ist der zusätzliche Einsatz von Farbmitteln teuer und damit nicht ökonomisch.

Es wurde gefunden, dass nanoskalige Ruße, das beschriebene Phänomen einer bläulichen Streuung in bestimmten Konzentrationsbereichen deutlich reduzieren. Es war dabei insbesondere überraschend, dass bereits relativ geringe Konzentrationen im Bereich von 0,00090 Gew.-% - 0,00300 Gew.-% ausreichen, um den Effekt signifikant zu vermindern.

Ferner war überraschend, dass nur bestimmte Verhältnisse von nanoskaligem Ruß zu IRabsorbierendem Additiv auf Boridbasis, den Streueffekt vermindern. Zu hohe Konzentrationen an Ruß vermindern drastisch die Transmission (<6 %) und verändern die Eigenfarbe der Zusammensetzung, während eine zu geringe Konzentration an Ruß nur einen unzureichenden Effekt hat. Dasselbe gilt für die Konzentration der IR-Absorber auf Boridbasis.

Überraschenderweise wurde somit gefunden, daß nur in einem eng definierten Konzentrationsbereich sowohl von IR-Absorber als auch von nanoskaligem Ruß bzw. einem definiertem Verhältnis dieser Komponenten zueinander die unerwünschten Farbeffekte durch Streuung ohne negative Beeinträchtigung anderer physikalischer Eigenschaften wie Transmission und Trübung verhindern oder zumindest signifikant reduzieren können

Das der vorliegenden Erfindung zugrunde liegende Problem wird somit durch Zusammensetzungen nach Anspruch 1 auf Basis Polycarbonat enthaltend definierte Konzentrationen von Borid-basierten IR-Absorbern sowie bestimmte Konzentrationen nanoskaliger Ruße gelöst. Dadurch konnte die durch Streuung verursachte bläulichviolette Farbe reduziert bzw. hin zu einer neutraleren Farbgebung verändert werden.

Bevorzugt werden in den erfindungsgemäßen Polymerzusammensetzungen weitere Farbmittel, weiter bevorzugt auf Anthrachinonbasis, Perinonbais oder auf Phthaloperinonbasis eingesetzt, da Scheiben vor allem im Automobilbereich in einer bestimmten Farbgebung erwünscht sind. Es zeigte sich, dass auch in diesen eingefärbten Polymerzusammensetzungen bei Zusatz von anorganischen IR-absorber auf Boridbasis, der oben beschriebene Streueffekt auftritt. Auch in diesen eingefärbten Zusammensetzungen konnte überraschenderweise durch Einsatz bestimmter Konzentrationen nanoskaliger Ruße der Streueffekt begrenzt werden.

Die erfindungsgemäßen Polymerzusammensetzung enthalten:
a) Polycarbonat,
b) einen anorganischen IR Absorber aus der Gruppe der Boridverbindungen vom Typ MxBy (M = La, Ce, Pr, Nd, Tb, Dy, Ho, Y, Sm, Eu, ER, Tm, Yb, Lu, Sr, Ti, Zr, Hf, V, Ta, Cr, Mo, W und Ca wobei Lanthanhexaborid (LaB₆), Praseodymiumborid (PrB₆), Neodymiumborid (NdB₆), Ceriumborid (CeB₆), Terbiumborid (TbB₆), Dysprosiumborid (DyB₆), Holmiumborid (HoB₆), Yttriumborid (YB₆), Samariumborid (SmB₆), Europiumborid (EuB₆), Erbiumborid (ErB₆), Thuliumborid (TmB₆), Ytterbiumborid (YbB₆), Lutetiumborid (LuB₆), Strontiumborid (SrB₆), Calciumborid (CaB₆), Titaniumborid (TiB₂), Zirconiumborid (ZrB₂), Hafniumborid (HfB₂), Vanadiumborid (VB₂), Tantalumborid (TaB₂), Chromborid (CrB and CrB₂), Molybdänborid (MoB₂, Mo₂B₅ and MoB), Wolframborid (W₂B₅), oder Kombinationen dieser Boride bevorzugt sind. Ganz besonders bevorzugt sind Boride auf Basis von Lanthanhexaborid (LaB₆) oder Mischungen enthaltend Lanthanhexaborid.
   Die Boride werden in einer Menge von 0,00270 Gew.-% - 0,00800 Gew.-% berechnet als Feststoffanteil an Borid in der Polymer-Gesamtzusammensetzung eingesetzt. In einer besonderen Ausführungsform, die weitere Farbmittel enthalten kann, werden die Boride in einer Menge von bevorzugt 0,00350 Gew.-% bis 0,00800 Gew.-% und insbesondere bevorzugt 0,00400 Gew.-% bis 0,00800 Gew.% berechnet als Feststoffanteil an Borid in der Polymer-Gesamtzusammensetzung eingesetzt. Feststoffanteil an Borid meint in diesem Zusammenhang das Borid als Reinstoff und nicht eine Suspension oder andere Zubereitung, enthaltend den Reinstoff,
c) mindestens ein nanoskaliger Ruß enthält.
   Der nanoskalige Ruß wird in der erfindungsgemäßen Zusammensetzung in Konzentrationen von 0,00090 Gew.-% - 0,00300 Gew.-% und bevorzugt in Konzentrationen von 0,00100 Gew.-% bis 0,00280 Gew-% eingesetzt. In einer besonderen Ausführungsform, die weitere Farbmittel enthalten kann, wird der nanoskalige Ruß bevorzugt in einer Menge von 0,00140 Gew.-% bis 0,00260 Gew.-% insbesondere bevorzugt in einer Menge von 0,00150 Gew.-% bis 0,00250 Gew.-% eingesetzt,
d) optional mindestens ein Farbmittel auf Anthrachinonbasis, Perinonbasis oder auf Phthaloperinonbasis bzw. deren Gemische,
   und
e) optional Additive, wie Stabilisatoren, Antioxidantien, Entformungsmittel, Flammschutzmittel, Thermostabilisatoren, UV-Stabilisatoren, oder optische Aufheller. Polymere im Sinne der Erfindung sind Polycarbonate oder Copolycarbonate auf Basis von Diphenolen.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Polycarbonate im Sinn der vorliegenden Erfindung sind sowohl Homopolycarbonate als auch Copolycarbonate; die Polycarbonate können in bekannter Weise linear oder verzweigt sein.

Die Herstellung der Polycarbonate erfolgt in bekannter Weise aus Diphenolen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne', BAYER AG, "Polycarbonates" in Encyclopedia of Polymer Science and Engineering, Volume 11, Second Edition, 1988, Seiten 648-718 und schliesslich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha - alpha '-Bis-(hydroxyphenyl)-diisopropylbenzole, Phtalimidine abgeleitet von Isatin- oder Phenolphthaleinderivaten sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hdydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethyl-cyclohexan.

Besonders bevorzugte Diphenole sind 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate ist nur ein Diphenol eingesetzt, im Fall der Copolycarbonate sind mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind sowohl Monophenole als auch Monocarbonsäuren. Geeignete Monophenole sind Phenol selbst, Alkylphenole wie Kresole, p-tert.-Butylphenol, Cumylphenol, p-n-Octylphenol, p-isoOctylphenol, p-n-Nonylphenol und p-iso-Nonylphenol, Halogenphenole wie p-Chlorphenol, 2,4-Dichlorphenol, p-Bromphenol und 2,4,6-Tribromphenol, 2,4,6-Trijodphenol, p-Jodphenol, sowie deren Mischungen.

Bevorzugte Kettenabbrecher sind Phenol, Cumylphenol und/oder p-tert.-Butylphenol.

Geeignete Monocarbonsäuren sind weiterhin Benzoesäure, Alkylbenzoesäuren und Halogenbenzoesäuren.

Bevorzugte Kettenabbrecher sind ferner die Phenole welche ein oder mehrfach mit C1 bis C30-Alkylresten, linear oder verzweigt, bevorzugt unsubstituiert oder mit tert.-Butyl substituiert sind.

Die Menge an einzusetzendem Kettenabbrecher beträgt bevorzugt 0,1 bis 5 Mol%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2 , 4 , 6-Dimethyl-2,4,6-tri(4-hydroxyphenyl)-heptan, 1,3,5-Tri(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2 , 4-Bis-(4-hydroxyphenylisopropyl)-phenol, 2,6-Bis-(2-hydroxy-5'-methyl-benzyl)-4-methylphenol, 2-(4-hydroxyphenyl)-2-(2,4-dihydroxyphenyl)-propan, Hexa-(4(4-hydroxyphenylisopropyl)-phenyl)-orthoterephthalsäureester, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol%, bezogen wiederum auf Mole an jeweils eingesetzten Diphenolen.

Die Verzweiger können entweder mit den Diphenolen und den Kettenabbrechern in der wässrig alkalischen Phase vorgelegt werden, oder in einem organischen Lösungsmittel gelöst vor der Phosgenierung zugegeben werden. Im Fall des Umesterungsverfahrens werden die Verzweiger zusammen mit den Diphenolen eingesetzt.

Die aromatischen Polycarbonate der vorliegenden Erfindung besitzen Gewichtsmittelmolekulargewichte Mw (ermittelt durch Gelpermeationschromatographie und Eichung mit Polycarbonateichung) zwischen 5000 und 200.000, vorzugsweise zwischen 10.000 und 80.000 und besonders bevorzugt zwischen 15.000 und 40.000 (dies entspricht in etwa zwischen 12.000 und 330.000, vorzugsweise zwischen 20.000 und 135.000 und besonders bevorzugt zwischen 28.000 und 69.000 ermittelt durch Eichung mittels Polystyrolstandard)

Die erfindungsgemäßen Polymer-Zusammensetzungen können neben den erfindungsgemäßen Stabilisatoren optional noch weitere übliche Polymeradditive enthalten, wie z.B. die in EP-A 0 839 623, WO-A 96/15102, EP-A 0 500 496 oder "Plastics Additives Handbook", Hans Zweifel, 5th Edition 2000, Hanser Verlag, München) beschriebenen Antioxidantien, Entformungsmittel, Flammschutzmittel, Farbmittel, Thermostabilisatoren, UV-Stabilisatoren, oder optische Aufheller in den für die jeweiligen Thermoplasten üblichen Mengen, wobei von den genannten optional enthaltenen weiteren üblichen Polymeradditiven Farbmittel in einer speziellen Ausführungsform der Erfindung besonders bevorzugt sind. Bevorzugt werden die weiteren Polymeradditive in Mengen von 0 Gew.-% bis zu 5 Gew.-%, weiter bevorzugt 0,1 Gew.-% bis 1 Gew.-%, jeweils bezogen auf die Menge der jeweiligen Polymer-Gesamtzusammensetzungen verwendet. Auch Mischungen mehrerer Zusatzstoffe sind geeignet.

Die nanoskaligen anorganischen IR-Absorber Partikel auf Boridbasis, welche Gegenstand der vorliegenden Anmeldung sind, sind vorzugsweise ein Metallborid wobei das Metall ausgewählt aus der Gruppe die La, Ce, Pr, Nd, Tb, Dy, Ho, Y, Sm, Eu, ER, Tm, Yb, Lu, Sr, Ti, Zr, Hf, V, Ta, Cr, Mo, W und Ca umfaßt. Die Form des Hexaborids ist besonders bevorzugt. Insbesondere bevorzugt sind Lanthanhexaborid (LaB₆), Praseodymiumborid (PrB₆), Neodymiumborid (NdB₆), Ceriumborid

(CeB₆), Terbiumborid (TbB₆), Dysprosiumborid (DyB₆), Holmiumborid (HoB₆), Yttriumborid (YB₆), Samariumborid (SmB₆), Europiumborid (EuB₆), Erbiumborid (ErB₆), Thuliumborid (TmB₆), Ytterbiumborid (YbB₆), Lutetiumborid (LuB₆), Strontiumborid (SrB₆), Calciumborid (CaB₆), Titaniumborid (TiB₂), Zirconiumborid (ZrB₂), Hafniumborid (HfB₂), Vanadiumborid (VB₂), Tantalumborid (TaB₂), Chromborid (CrB and CrB₂), Molybdänborid (MoB₂, Mo₂B₅ and MoB), Wolframborid (W₂B₅), oder Kombinationen dieser Boride. Ganz besonders bevorzugt sind Boride auf Basis von Lanthanhexaborid (LaB₆) oder Mischungen enthaltend Lanthanhexaborid.

Die Oberfläche dieser Partikel ist vorzugsweise unoxidiert; jedoch können oxidierte oder teilweise oxidierte Partikel eingesetzt werden.

In einer besonderen Ausführungsform der vorliegenden Erfindung ist die alleinige Verwendung von Lanthanhexaborid (LaB₆) ganz besonders bevorzugt.

Die Herstellung der Borid-basierten IR-Absorber kann z.B. aus Oxiden der seltenen Erden wie z.B. X₂O₃ (mit X z.B. = La, Ce, Pr, Nd, Gd) und z.B. Borcarbiden (B4C) erfolgen in dem diese Verbindungen gemischt und im Vakuum bei hohen Temperaturen, wie z.B. 1500 °C für einige Stunden, wie z.B. 3 Stunden, getempert werden. Man erhält das Borid in Form eines Pulvers. Bezüglich der Form der feinteiligen Partikel gibt es keinerlei Beschränkung - so können die Partikel eine spärische, Plättchen-artige, irreguläre oder nadelförmige Form aufweisen. Die Absorptionsfähigkeit von IR-Strahlung ist umso größer, je kristalliner die Boridpartikel sind. Jedoch weisen auch Partikel mit einer niedrigen Kristallinität (z.B. gekennzeichnet durch einen breiten Beugungspeak im Röntgenbeugungsexperiment) eine im Sinne der Erfindung ausreichende IR-Absorptionseigenschaft auf. Dies ist allerdings nur der Fall, solange die Partikel im Inneren eine Bindung aus dem verwendetem Metall und Bor aufweisen. Die Farbe der Partikel im Pulver kann z.B. gräulich-schwarz, bräunlich-schwarz, grünlich-schwarz oder dergleichen sein.

Die Durchschnittsgröße der Partikel (ermittelt durch TEM / Transmissionselektronenmikroskopie) ist kleiner als 200 nm, bevorzugt kleiner gleich 150 nm und besonders bevorzugt kleiner als 100 nm, wobei die Partikeldurchmesser größer als 5 nm, weiter bevorzugt größer als 10 nm und besonders bevorzugt größer als 15 nm sind.

Bezüglich der Größenverteilung der Partikel liegen keinerlei Beschränkungen vor so können auch bi- oder höher-modale Verteilungen vorliegen. Die Partikel sind im sichtbaren Bereich des Spektrums transparent, wobei Transparent bedeutet, dass die Absorption dieser IR-Absorber im sichtbaren Bereich verglichen mit der Absorption im IR-Bereich gering ist und der IR-Absorber zu keiner deutlich erhöhten Trübung der Zusammensetzung oder dem jeweiligen Endprodukt führt. Damit ist gemeint, dass in der Gesamtzusammensetzung der transparente Formkörper eine Transmission von mindesten 6 % und eine Trübung von weniger als 3 %, bevorzugt weniger als 2,5 %, weiter bevorzugt weniger als 2,0 %, aufweist. Der Tds-Wert liegt bevorzugt bei weniger als 70%, insbesondere bevorzugt bei weniger als 60 % und ganz besonders bevorzugt bei weniger als 50 %. In einer besonderen Ausführungsform beträgt der Tds -Wert weniger als 20%, besonders bevorzugt weniger als 15% (T_{ds} : Direct Solar Transmittance; Werte werden gemessen an optischen Farbmusterplatten mit einer Dicke von 4 mm. Die Berechnung der Gesamttransmission T_{ds} wird nach ISO 13837, computational convention "A" durchgeführt).

Die Größe der Partikel kann mit Hilfe der Transmissionselektronenspektroskopie (TEM) bestimmt werden. Derartige Messungen an IR-Absorber-Nanopartikeln sind z.B. in Adachi et al., J. Am. Ceram. Soc. 2008, 91, 2897-2902, beschrieben.

Die Oberfläche der Partikel kann behandelt sein. So kann die Oberfläche mit einem Silan behandelt oder mit einer Titan-basierten, Zirkonium-basierten Schicht oder ähnlichen Schichten versehen sein. Durch diese Behandlung kann die Widerstandsfähigkeit gegen Feuchtigkeit erhöht werden. Diese Art von Beschichtung erhöht die Langzeitstabilität bezüglich der IR-Absorption und ist z.B. in US 2005 0161642 beschrieben.

Neben den Partikeln auf Boridbasis können - allerdings nicht notwendigerweise - weitere Partikel auf Basis von SiO₂ TiO₂ ZuO₂ Al₂O₃ oder MgO vorliegen. Diese Partikel liegen bevorzugt in einer Größe von kleiner als 200 nm vor.

In der vorliegenden Erfindung werden die feinteiligen IR-Absorber Partikel in Form einer Dispersion in die Polymermatrix eingebracht. Diese Dispersion verhindert die Reaglomeration und erleichtert die Einarbeitung in eine thermoplastische Matrix wie z.B. Polycarbonat. Polymerartige Dispergiermittel werden bevorzugt eingesetzt. Geeignete Polymer-basierte Dispergiermittel sind vor allem Dispergiermittel, die eine hohe Lichttransmission aufweisen, wie z.B. Polyacrylate, , Polyether, Polyester oder Polyurethane sowie davon abgeleitete Polymere. Als Dispergiermittel bevorzugt sind Polyacrylate, Polyether und Polyester-basierte Polymere. Bevorzugt werden hochtemperaturstabile Dispergiermittel eingesetzt.

Das Blendverhältnis von polymeren Dispergiermittel zu Boridpartikel liegt gewöhnlich bei 0,2 Gew.-% bis 50,0 Gew-%, bevorzugt 0,5 Gew.-% - 50,0 Gew-% und ganz besonders bevorzugt bei 1,0 Gew-% - 40,0 Gew.-% bezogen auf den Gewichtsanteil von anorganischem IR-Absorber. Zur Herstellung der erfindungsgemäßen anorganischen IR-Absorber Nanopartikel kann der IR-Absorber mit den unten beschriebenen Dispergiermitteln und weiteren organischen Lösemitteln, wie z.B. Toluol, Benzol oder ähnliche aromatische Kohlenwasserstoffe vermischt und in geeigneten Mühlen, wie z.B. Kugelmühlen, unter Zugabe von Zirkoniumoxid (z.B. mit einem Durchmesser von 0,3 mm) gemahlen werden, um die gewünschte Partikelgrößenverteilung herzustellen. Man erhält die Nanopartikel in Form einer Dispersion. Nach Mahlung können gegebenenfalls weitere Dispergiermittel zugesetzt werden. Das Lösungsmittel wird bei erhöhten Temperaturen und reduziertem Druck entfernt.

Die Herstellung von Lanthanhexaborid sowie der Lanthanhexaborid Dispersion ist beispielsweise beschrieben in JP2003-277045, DE 10392543 sowie in Adachi et al. , J. Am. Chem. Ceram. Soc 2008, 91 [9], 2897-2902. Lanthanhexaborid in Form der Dispersion, welches geeignet im Sinne der Erfindung ist, ist kommerziell erhältlich von der z.B. bei der Firma Sumitomo Metal Mining Co., Ltd beispielsweise unter dem Handelsnamen KHDS 06.

Für die vorliegende Erfindung geeignete Dispergiermittel sind kommerziell erhältlich. Insbesondere sind Dispergiermittel auf Polyacrylatbasis geeignet. Polyacrylate sind z.B. unter den Handelsnamen EFKA®, z.B. EFKA® 4500 und EFKA® 4530 bei Ciba Specialty Chemicals erhältlich. Polyester-basierte Dispergiermittel sind ebenfalls geeignet. Polyesterhaltige Dispergiermittel sind unter den Handelsnamen Solsperse®, z.B. Solsperse® 22000, 24000SC, 26000, 27000 von Avecia erhältlich. Polyurethan-basierte Systeme sind ebenfalls geeignet. Diese sind unter dem Handelsnamen EFKA® 4046, EFKA® 4047 von Ciba Specialty Chemicals erhältlich. Texaphor® P60 und P63 sind entsprechende Handelsnamen der Cognis. Polyetherhaltige Dispergiermittel können ebenfalls zum Einsatz kommen. Diese sind z.B. unter den Handelsnamen Disparlon® DA234 und DA325 der Firma Kusumoto Chemicals bekannt.

Die Dispergiermittel können einzeln oder in Kombinationen verwendet werden. Hinsichtlich der thermischen Beständigkeit sind Dispergiermittel aus der Gruppe der Polyacrylate und der Polyester besonders bevorzugt.

Das IR-absorbierende anorganische Borid wird bevorzugt in organischer Matrix dispergiert und bevorzugt in nachfolgend beschriebenen Konzentrationen in der erfindungsgemäßen Polymer-Zusammensetzung eingesetzt. Die Boride werden in einer Mengen von 0,00270 Gew.-% - 0,00800 Gew.-% berechnet als Feststoffanteil an Borid in der Polymer-Gesamtzusammensetzung eingesetzt. In einer besonderen Ausführungsform, die weitere Farbmittel enthalten kann, werden die Boride in einer Menge von bevorzugt 0,00350 Gew.-% - 0,00800 Gew.-% und insbesondere bevorzugt 0,00400 Gew.-% - 0,00800 Gew.-% berechnet als Feststoffanteil an Borid in der Polymer-Gesamtzusammensetzung eingesetzt. Feststoffanteil an Borid meint in diesem Zusammenhang das Borid als Reinstoff und nicht eine Suspension oder andere Zubereitung, enthaltend den Reinstoff.

In einer bevorzugten Ausführungsform beträgt liegt das Lanthanhexaborid in einer gebrauchsfähigen Dispersion aus einem Gemisch von Polymethylmethacrylat und Polyester in einem Festoffgehalt von 5 Gew.-% - 25 Gew.-% vor. Daneben können organische Lösungsmittel wie Toluol und weiter anorganische Partikel wie Zirconiumdioxid vorliegen.

In einer weiteren Ausführungsform können optional neben den erfindungsgemäßen Boriden als IR-Absorber zusätzlich weitere IR-Absorber verwendet werden, wobei deren Anteil bezüglich Menge und/oder Leistung in einer derartigen Mischung aber jeweils unterhalb derer der oben beschriebenen Boride liegt. Bei Mischungen sind hierbei Zusammensetzungen bevorzugt, die zwei bis einschließlich fünf und besonders bevorzugt zwei oder drei unterschiedliche IR-Absorber enthalten. In einer besonderen Ausführungsform der vorliegenden Erfindung enthält die erfindungsgemäße Polymer-Zusammensetzung keinerlei anorganische IR-Absorber vom Typ der Wolframate wie beispielsweise Cäsiumwolframat, Cs_{0,33}WO₃.

Der weitere IR-Absorber ist vorzugsweise ausgewählt aus der Gruppe der Zinnoxide, besonders bevorzugt Antimon dotiertes Zinnoxid oder Indiumzinnoxid enthält.

Weiterhin können Verbindungen wie Indiumoxid, das mit 2 bis 30 Atom%, vorzugsweise mit 4 bis 12 Atom% Zinn (ITO) oder mit 10 bis 70 Atom% Fluor dotiert ist, zugesetzt werden.

Besonders bevorzugt ist die Kombination mit Zinnoxid als weiterem IR-Absorber, welches mit 2 bis 60 Atom% Antimon (ATO) oder mit 10 bis 70 Atom% Fluor dotiert ist.

Ferner ist Zinkoxid besonders geeignet, das mit 1 bis 30 Atom%, vorzugsweise mit 2 bis 10 Atom% Aluminium oder mit 2 bis 30 Atom% Indium oder mit 2 bis 30 Atom% Gallium dotiert ist.

Mischungen der oben genannten Infrarot-Absorbern sind besonders geeignet, da der Fachmann durch eine gezielte Auswahl eine Optimierung der Absorption im nahen Infrarotbereich erreichen kann.

In einer weiteren bevorzugten Ausführungsform weist der/die zusätzliche(n) IR-Absorber ein von dem eingesetzten Borid unterschiedliches Absorptionsspektrum bezogen auf die Absorptionsmaxima auf, so daß ein maximaler Absorptionsbereich durch die Maxima abgedeckt wird.

Geeignete zusätzliche organische Infrarot-Absorber sind nach Stoffklassen z.B. in M. Matsuoka, Infrared Absorbing Dyes, Plenum Press, New York, 1990 beschrieben. Besonders geeignet sind Infrarot-Absorber aus den Klassen der Phthalocyanine, der Naphthalocyanine, der Metallkomplexe, der Azofarbstoffe, der Anthraquinone, der Quadratsäurederivate, der Immoniumfarbstoffe, der Perylene, der Quaterylene sowie der Polymethine. Davon sind ganz besonders Phthalocyanine und Naphthalocyanine geeignet.

Aufgrund der verbesserten Löslichkeit in Thermoplasten sind Phthalocyanine und Naphthalocyanine mit sterisch anspruchsvollen Seitengruppen vorzuziehen, wie beispielsweise Phenyl, Phenoxy, Alkylphenyl, Alkylphenoxy, tert-Butyl, (-S-Phenyl), -NH-Aryl, -NH-Alkyl und ähnliche Gruppen.

Die Polymer-Zusammensetzung enthält mindestens ein anoskaliger Ruß.

Der Ruß liegt bevorzugt fein dispergiert in der organischen Polymermatrix vor und ist bevorzugt nanoskalig. Geeignete Ruße weisen eine durchschnittliche Teilchengröße auf von bevorzugt weniger als 100 Nanometer (nm), weiter bevorzugt weniger als 75 nm , noch weiter bevorzugt weniger als 50 nm und besonders bevorzugt weniger als 40 nm, wobei die durchschnittliche Teilchengröße vorzugsweise größer als 0,5 nm. weiter bevorzugt größer als 1 nm und besonders bevozugt größer als 5nm ist.

Im Sinne der Erfindung geeignete Ruße unterscheiden sich von sogenannten Leitrußen dadurch, daß sie nur geringe oder keine elektrische Leitfähigkeit aufweisen. Leitruße weisen im Vergleich zu den hier verwendeten Rußen bestimmte Morphologien und Überstrukturen auf, um eine hohe Leitfähigkeit zu erzielen. Demgegenüber lassen sich die hier verwendeten nanoskaligen Ruße sehr gut in Thermoplasten dispergieren, so dass kaum zusammenhängende Bereiche aus Ruß auftreten, aus denen eine entsprechende Leitfähigkeit resultieren könnte. Kommerziell erhältliche und im Sinne der Erfindung geeignete Ruße sind unter einer Vielzahl von Handelsnamen und Formen, wie Pellets oder Pulver, erhältlich. So sind geeignete Ruße unter den Handelsnamen BLACK PEARLS®, als nass-verarbeitete Pellets unter den Namen ELFTEX®, REGAL® und CSX®, und in einer flockigen Erscheinungsform unter MONARCH®, ELFTEX®, REGAL® und MOGUL® - alle erhältlich von Cabot Corporation.

In einer besonders bevorzugten Ausführungsform weisen die Ruß-Typen Partikelgrößen von 10 - 30 nm auf und haben eine Oberfläche von vorzugsweise 35- 138 m² pro g (m²/g). Der Ruß kann behandelt oder unbehandelt sein - so kann der Ruß mit bestimmten Gasen, mit Silica oder organischen Substanzen, wie z.B. Butyllithium behandelt sein. Durch eine derartige Behandlung kann eine Modifizierung oder Funktionlisierung der Oberfläche erreicht werden. Dies kann die Kompatibiliät zur entsprechend eingesetzten Matrix fördern. Insbesondere bevorzugt sind Ruße, die unter dem Handelsnamen BLACK PEARLS® (CAS-Nr. 1333-86-4) gehandelt werden.

Der nanoskalige Ruß wird in der erfindungsgemäßen Zusammensetzung in Konzentrationen von 0,00090 Gew.-% - 0,00300 Gew.-% und bevorzugt in Konzentrationen von 0,00100 Gew. % - 0,00280 Gew-% eingesetzt. In einer besonderen Ausführungsform, die weitere Farbmittel enthalten kann, wird der nanoskalige Ruß bevorzugt in einer Menge von 0,00140 Gew.-% - 0,00260 Gew.-% insbesondere bevorzugt in einer Menge von 0,00150 Gew.-% - 0,00250 Gew.-% eingesetzt.

In einer bevorzugten Ausführungsform ist das Verhältnis von IR-Absorber zu Ruß 20 : 1 bis 0,4 : 1, bevorzugt 15 : 1 bis 1 : 1. In einer speziellen Ausführungsform der vorliegenden Erfindung beträgt das Verhältnis von IR-Absorber zu Ruß 5 : 1 bis 1,5 : 1.

Die vorliegend angegebenen Konzentrationen für Ruße und IR-Absorber finden Anwendung für Fertigteile mit Dicken 3,5 - 7,0 mm und bevorzugt von 4 mm - 6 mm. Bei niedriger oder höherer Dicke müssen die Konzentrationen entsprechend nach oben bzw. unten angepasst werden, um beispielsweise eine zu starke Trübung oder eine zu geringe Wirkung zu vermeiden.

In einer besonderen Ausführungsform enthält die Polymerzusammensetzung Thermostabilisatoren. Insbesonders geeignet sind Phosphite und Phosphonite sowie Phosphine. Beispiele sind Triphenylphosphit, Diphenylalkylphosphit, Phenyldialkylphosphit, Tris(nonylphenyl)phosphit, Trilaurylphosphit, Trioctadecyl phosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit,Bis(2,4-di- cumylphenyl)pentaerythritol diphosphit, Bis(2,6-di-tert-butyl-4-methylphenyl)pentaerythritoldiphosphit, Diisodecyloxypentaerythritoldiphosphit, Bis(2,4-di-tert-butyl-6-methylphenyl)- pentaerythritoldiphosphit, Bis(2,4,6-tris(tert-butylphenyl)pentaerythritoldiphosphit, Tristea-rylsorbitoltriphosphit, Tetrakis(2,4-di-tert-butylphenyl)-4,4'-biphenylen diphosphonit, 6-Isooctyloxy-2,4,8,10-tetra-tert-butyl-12H-dibenz[d,g]-1,3,2-dio-xaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1 , 3, 2-dio-xaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, 5-Butyl-5-ethyl-2-(2,4,6-tri-tert-butylphenoxy)-1,3,2-dioxaphosphiran, Triphenylphosphin (TPP), Trialkylphenylphosphin, Bisdiphenylphosphino-ethan oder ein Trinaphthylphosphin. Insbesondere bevorzugt werden Triphenylphosphin (TPP), Irgafos^{®} 168 (Tris(2,4-di-tert-butyl-phenyl)-phosphit) und Tris(nonylphenyl)phosphit oder deren Mischungen eingesetzt.

Ferner können phenolische Antioxidantien wie alkylierte Monophenole, alkylierte Thioalkylphenole, Hydrochinone und alkylierte Hydrochinone eingesetzt werden. Vorzugsweise werden Irganox^{®} 1010 (Pentaerythrit- 3-(4-hydroxy-3,5-di-tert-butylphenyl)propionat; CAS: 6683-19-8) und Irganox 1076^{®} (2,6-Di-tert-butyl-4-(octadecanoxycarbonylethyl)phenol) eingesetzt. In einer speziellen Ausführungsform der vorliegenden Erfindung werden die erfindungsgemäßen Phosphinverbindungen gemeinsam mit einem Phosphit oder einem phenolischen Antioxidans oder einer Mischung aus den beiden letztgenannten Verbindungen eingesetzt.

In einer bevorzugten Ausführungsform enthält die erfindungsgemäße Polymer-Zusammensetzung weiterhin einen Ultraviolett-Absorber. Zum Einsatz in der erfindungsgemäßen Polymer-Zusammensetzung geeignete Ultraviolett-Absorber sind Verbindungen, die eine möglichst geringe Transmission unterhalb 400 nm und eine möglichst hohe Transmission oberhalb von 400 nm besitzen. Derartige Verbindungen und deren Herstellung sind literaturbekannt und sind beispielsweise in den EP-A 0 839 623, WO-A 96/15102 und EP-A 0 500 496 beschrieben. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin^{®} 234, Ciba Spezialitätenchemie, Basel), 2-(2'-Hydroxy-5'-(tert.-octyl)-phenyl)-benzotriazol (Tinuvin^{®} 329, Ciba Spezialitätenchemie, Basel), 2-(2'-Hydroxy-3'-(2-butyl)-5'-(tert.butyl)-phenyl)-benzotriazol (Tinuvin^{®} 350, Ciba Spezialitätenchemie, Basel), Bis-(3-(2H-benztriazolyl)-2-hydroxy-5-tert.-octyl)methan, (Tinuvin^{®} 360, Ciba Spezialitätenchemie, Basel), (2-(4,6-diphenyl-1,3,5-triazin-2-yl)-5-(hexyloxy)-phenol (Tinuvin^{®} 1577, Ciba Spezialitätenchemie, Basel), sowie der Benzophenone 2,4-Dihydroxy-benzophenon (Chimasorb^{®} 22 , Ciba Spezialitätenchemie, Basel) und 2-Hydroxy-4-(octyloxy)-benzophenon (Chimassorb^{®} 81, Ciba, Basel), 2-Propenoic acid, 2-cyano-3,3-diphenyl-, 2,2-bis[[(2-cyano-1-oxo-3,3-diphenyl-2-propenyl)oxy]-methyl]-1,3-propanediyl ester (9CI) (Uvinul^{®} 3030, BASF AG Ludwigshafen), 2-[2-hydroxy-4-(2-ethylhexyl)oxy]phenyl-4,6-di(4-phenyl)phenyl-1,3,5-triazine (CGX UVA 006, Ciba Spezialitätenchemie, Basel) oder Tetra-ethyl-2,2'-(1,4-phenylene-dimethylidene)-bismalonate (Hostavin^{®} B-Cap, Clariant AG).

Es können auch Mischungen dieser Ultraviolett-Absorber eingesetzt werden.

Hinsichtlich der Menge des in der Zusammensetzung enthaltenen Ultraviolett-Absorbers liegen keine besonderen Beschränkungen vor, solange die gewünschte Absorption von UV-Strahlung sowie eine ausreichende Transparenz des aus der Zusammensetzung hergestellten Formkörpers gewährleistet sind. Gemäß einer speziellen Ausführungsform der Erfindung enthält die Zusammensetzung Ultraviolett-Absorber in einer Menge von 0,05 Gew.-% - 20,00 Gew.-%, insbesondere von 0,07 Gew.-% - 10,00 Gew.-% und ganz besonders bevorzugt von 0,10 Gew.-% - 1,00 Gew.-%.

Die erfindungsgemäßen Zusammensetzungen enthalten neben dem anorganischen IR-Absorber und dem anorganischen nanoskaligen Pigment bevorzugt weitere Farbmittel zur Einstellung der Farbe. Die Farbstoffe dienen zur Einstellung der Farbe in Transmission - sie beeinflussen die reflektierte Farbe nur in untergeordnetem Maße. Dabei handelt es sich bevorzugt um Farbmittel auf Anthrachinonbasis, Perinonbasis oder auf Phthaloperinonbasis.

Bevorzugt wird zumindest ein Farbmittel der folgenden Strukturen (1) - (2) eingesetzt:

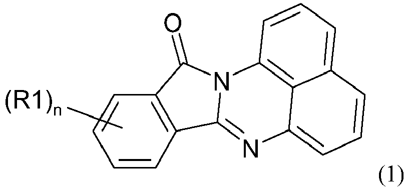

Dabei kann R1 ein linearer oder verzweigter Alkylrest, oder Halogen, bevorzugt ein Halogen sein. n ist eine natürliche Zahl zwischen 0 und 4.

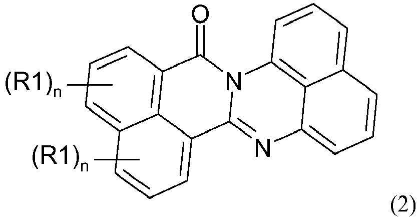

Worin R1 unabhängig voneinander die oben beschrieben Reste annehmen kann und n für jeden bezeichneten aromatischen Ring eine natürliche Zahl von 0 - 3 darstellt.

Die Farbstoffe der Formeln (1) und (2) werden bevorzugt in Mengen von 0,00010 Gew.-% - 0,05000 Gew.-% insbesondere bevorzugt von 0,00100 Gew.-% - 0,01000 Gew.-% eingesetzt jeweils bezogen auf die Gesamtformmasse.

Als weitere zusätzliche Farbstoffe oder Pigmente können beispielsweise organische oder anorganische Pigmente oder organische Farbstoffe oder dergleichen eingesetzt werden. Als anorganische Pigmente können z.B. Schwefel-haltige Pigmente wie Cadmium Red and Cadmium Gelb, Eisencyanid basierte Pigmente wie Berliner Blau, Oxid-Pigmente wie Titandioxid, Zinkoxid, rotes Eisenoxid, schwarzes Eisenoxid, Chromoxid, Titangelb, Zink-Eisen basiertes Braun, Titan-Cobalt basiertes Grün, Cobaltblau, Kupfer-chrom basiertes Schwarz und Kupfer-Eisen basiertes Schwarz oder Chrom-basierte Pigmente wie Chromgelb. Bevorzugte organische Pigmente oder Farbstoffe sind z.B. Phthalocyanin-abgeleitete Farbstoffe wie Kupfer-Phthalocyanin Blau and Kupfer Phthalocyanin Grün, kondensierte polycyclische Farbstoffe und Pigmente wie Azo-basierende (z.B. Nickel-Azogelb), Schwefel-Indigo-Farbstoffe, Perynon-basierte, Perylenebasierte, Chinacridon-abgeleitete, Dioxazin-basierte, Isoindolinon-basierte und Chinophthalonabgeleitete Derivate, Anthrachinon-basierte, heterocyclische Systeme usw. Von diesen sind Cyaninderivate, Chinolinderivate, Anthrachinonderivate, Phthalocyaninderivate bevorzugt. Konkrete Beispiele für Handelsprodukte wären z.B. MACROLEX Blau RR ®, MACROLEX Violett 3R®, MACROLEX Violett B® (Lanxess AG, Deutschland), Sumiplast Violett RR, Sumiplast Violett B, Sumiplast Blau OR, (Sumitomo Chemical Co., Ltd.), Diaresin Violett D, Diaresin Blau G, Diaresin Blau N (Mitsubishi Chemical Corporation), Heliogen Blau oder Heliogen Grün (BASF AG, Deutschland).

Diese Farbstoffe können in Mengen von 0.00001 Gew.-% - 1,00000 Gew.-%, bevorzugt von 0.00010 Gew.-% - 0.10000 Gew.-% und besonders bevorzugt von 0.00050 Gew.-% - 0.05000 Gew.-% eingesetzt werden.

Besonders geeignete Entformungsmittel für die erfindungsgemäße Zusammensetzung sind z.B. Pentaerythrittetrastearat (PETS) oder Glycerinmonostearat (GMS). Methoden zur Herstellung der erfindungsgemäßen Polymer-Zusammensetzungen sind dem Fachmann bekannt.

Die Herstellung der erfindungsgemäßen Polymer-Zusammensetzungen enthaltend Polycarbonat, einen anorganischen IR-Absorber aus der Gruppe der Boride, optional ein oder mehrere Farbmittel und optional weitere übliche Polymeradditive erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind.

Insbesondere können hierbei die IR-Absorber, Farbmittel, Ultraviolett-Absorber und sonstigen Additive der erfindungsgemäßen Zusammensetzung durch bekannte Verfahren oder als Masterbatch eingebracht werden.

Die Verwendung von Masterbatchen ist insbesondere zum Einbringen des IR-Absorbers bevorzugt, wobei insbesondere Masterbatche auf Basis von Polycarbonat verwendet werden, in die die IR-Absorber in Form einer gebrauchsfertigen IR-Absorberformulierung enthaltend Dispergiermittel, vorzugsweise Polyacrylat-, Polyether- oder Polyester-basierte Dispergiermittel, hiervon vorzugsweise hochtemperaturstabile Dispergiermittel, wie einem Polyacrylat (Homo- oder Copolymer), wie z.B. Polymethylmethacrylat, und/oder Polyester oder deren Mischungen, weiterhin enthaltend Hilfsstoffe wie zum Beispiel Zirkoniumdioxid und ggf. Restlösemittel wie zum Beispiel Toluol, Benzol oder ähnliche aromatische Kohlenwasserstoffe eingetragen worden sind. Durch Verwendung dieser Masterbatche in Kombination mit den entsprechenden IR-Absorberformulierungen wird eine Agglomeration des IR-Absorbers in der Polymerzusammensetzung wirksam verhindert.

In diesem Zusammenhang kann die Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

In einer besonderen Ausführungsform wird der erfindungemäße IR-Absorber vor der Einarbeitung in die thermoplastische Polymermatrix ggf. mit dem erfindungsgemäßen nanoskaligen Pigment und ggf. weiteren Additiven zu einem Masterbatch vermischt, wobei die Vermischung bevorzugt in der Schmelze unter Einwirkung von Scherkräften (zum Beispiel in einem Kneter oder Zweischneckenextruder) stattfindet. Dieses Verfahren bietet den Vorteil, daß der IR-Absorber besser in der Polymermatrix verteilt werden kann. Zur Herstellung de Masterbatches wird als Polymermatrix bevorzugt Polycarbonat gewählt, der auch die Hauptkomponente der letztlichen Polymer-Gesamtzusammensetzung darstellt.

Der so hergestellte Masterbatch enthält
a. 85,00 Gew.-% - 98,90 Gew.-%, bevorzugt 93,00 Gew.-% - 98,90 Gew.-% Polycarbonat;
b. 0,10 Gew.-% - 2,00 Gew.-% Borid als anorganischen IR-Absorber, vorzugsweise Lanthanhexaborid LaB₆; und
c. 1,00 Gew.-% - 4,80 Gew.-% Dispergiermittel;
d. optional 0,00 Gew.-%- 0,20 Gew.-%, bevorzugt 0,01 Gew.-% - 0,10 Gew.-%, mindestens eines Stabilisators ausgewählt aus der Gruppe, die Phosphine, Phosphite und phenolische Antioxidantien sowie Mischungen dieser Stabilisatoren umfaßt;
e. optional 0,001 Gew.-% - 0,200 Gew.-% nanoskaliger Ruß,
f. optional 0,00 - 8,00 Gew.-% mindestens eines weiteren Hilfsstoffs und/oder Additivs, wie z. B. Zirkondioxid;
g. optional Farbmittel,
wobei sich die Summe der Komponenten a-g zu 100 Gew.-% addiert.

Die erfindungsgemäßen Polymer-Zusammensetzungen können zu Erzeugnissen oder Formkörpern verarbeitet werden, in dem man beispielsweise die Polymer-Zusammensetzungen zunächst wie beschrieben zu Granulat extrudiert und dieses Granulat durch geeignete Verfahren zu verschiedenen Erzeugnissen oder Formkörpern in bekannter Weise verarbeitet.

Die erfindungsgemäßen Zusammensetzungen können in diesem Zusammenhang beispielsweise durch Heißpressen, Spinnen, Blasformen, Tiefziehen, Extrudieren oder Spritzgiessen in Erzeugnisse oder Formkörper, geformte Gegenstände wie Spielzeugteile, Fasern, Folien, Bändchen, Platten wie Massivplatten, Stegplatten, Doppelstegplatten oder Wellplatten, Gefäße, Rohre oder sonstige Profile, überführt werden. Von Interesse ist auch die Verwendung von Mehrschichtsystemen. Das Aufbringen kann zugleich oder unmittelbar nach der Formgebung des Grundkörpers geschehen, z.B. durch Coextrusion oder Mehrkomponentenspritzguss. Das Aufbringen kann aber auch auf den fertig geformten Grundkörper geschehen, z.B. durch Lamination mit einem Film oder durch Beschichtung mit einer Lösung.

Platten aus Basis- und optionaler Deckschicht / optionalen Deckschichten werden jedoch bevorzugt durch (Co)extrusion hergestellt.

Zur Extrusion wird die gegebenenfalls z.B. mittels Trocknung vorbehandelte Polymer-Zusammensetzung dem Extruder zugeführt und im Plastifizierungssystem des Extruders aufgeschmolzen. Die Kunststoffschmelze wird dann durch eine Breitschlitzdüse oder eine Stegplattendüse gedrückt und dabei verformt, im Walzenspalt eines Glättkalanders in die gewünschte endgültige Form gebracht und durch wechselseitige Kühlung auf Glättwalzen und der Umgebungsluft formfixiert. Es werden die zur Extrusion der Polymer-Zusammensetzung notwendigen Temperaturen eingestellt, wobei üblicherweise den Herstellerangaben gefolgt werden kann. Enthalten die Polymerzusammensetzungen beispielsweise Polycarbonate mit hoher Schmelzeviskosität, so werden diese normalerweise bei Schmelzetemperaturen von 260 °C bis 350 °C verarbeitet, entsprechend werden die Zylindertemperaturen des Plastifizierzylinders sowie die Düsentemperaturen eingestellt.

Durch Einsatz von einem oder mehreren Seitenextrudern und einer Mehrkanal-Düse oder gegebenenfalls geeigneten Schmelzeadaptern vor einer Breitschlitzdüse lassen sich thermoplastische Schmelzen verschiedener Zusammensetzung übereinander legen und somit mehrschichtige Platten oder Folien erzeugen (für die Coextrusion siehe beispielsweise EP-A 0 110 221, EP-A 0 110 238 und EP-A 0 716 919, für Details des Adapter- und Düsenverfahrens siehe Johannaber/Ast:,,Kunststoff- Maschinenführer", Hanser Verlag, 2000 und in Gesellschaft Kunststofftechnik: "Coextrudierte Folien und Platten: Zukunftsperspektiven, Anforderungen, Anlagen und Herstellung, Qualitätssicherung", VDI-Verlag, 1990).

Erfindungsgemäß bevorzugte Erzeugnisse oder Formkörper sind Platten, Folien, Verscheibungen, beispielsweise Autofenster, Fenster von Schienen- und Luftfahrzeugen, Autosonnendächer, Bedachungen oder Gebäudeverglasungen, die die erfindungsgemäßen Zusammensetzungen enthalten. Dabei können neben Massivplatten auch Doppelstegplatten oder Multistegplatten verwendet werden. Als weitere Komponenten der erfindungsgemäßen Erzeugnisse neben den erfindungsgemäßen Zusammensetzungen können beispielsweise weitere Werkstoffteile in den erfindungsgemäßen Erzeugnissen enthalten sein. Beispielsweise können Verscheibungen Dichtungsmaterialen am Rand der Verscheibungen aufweisen. Bedachungen können beispielsweise Metallkomponenten wie Schrauben, Metallstifte oder ähnliches aufweisen, die zur Befestigung oder Führung (bei Falt- oder Schiebedächern) der Bedachungselemente dienen können. Ferner können weitere Materialien mit den erfindungsgemäßen Zusammensetzungen verbunden werden, z.B. im 2-Komponenten-Spritzguss. So kann das entsprechende Bauteil mit IR-absorbierenden Eigenschaften mit einem Rand versehen werden, welcher z.B. dem Verkleben dient.

In einer besonderen Ausführungsform werden die Artikel aus der Zusammensetzung der vorliegenden Erfindung beschichtet. Diese Beschichtung dient dem Schutz des thermoplastischen Materials gegenüber allgemeinen Witterungseinflüssen (z.B. Schädigung durch Sonnenlicht) sowie gegenüber mechanischer Beeinträchtigung der Oberfläche (z.B. Verkratzen) und erhöht somit die Beständigkeit der entsprechend ausgerüsteten Artikel.

Es ist bekannt, dass Polycarbonat gegenüber UV-Strahlung mittels verschiedener Beschichtungen geschützt werden kann. Üblicherweise enthalten diese Beschichtungen UV-Absorber. Diese Schichten erhöhen ebenso die Kratzfestigkeit des entsprechenden Artikels. Die Artikel aus der vorliegenden Erfindung können Einschicht oder Mehrschichtsysteme tragen. Sie können ein- oder beidseitig beschichtet sein. In einer bevorzugten Ausführungsform enthält der Artikel einen Kratzfestlack enthaltend UV-Absorber. In einer besonderen Ausführungsorm enthält das Mehrschichterzeugnis mindestens eine Schicht enthaltend die erfindungsgemäße Zusammensetzung , mindestens eine UV-Schutzschicht und optional eine Kratzfestbeschichtung.

Bei Verscheibungsmaterialien trägt der Artikel mindestens eine Kratzfest- bzw. Antireflexbeschichtung auf mindestens einer Seite.

Die Herstellung der Beschichtung, z.B. einer Anti-Reflexbeschichtung, kann über verschiedene Methoden erfolgen. Beispielsweise kann über verschiedene Methoden des Aufdampfens, z.B. über Elektronenstrahlverfahren, Widerstandserhitzung sowie über Plasmaabscheidung oder verschiedener Sputtermethoden wie Hochfrequenz-Sputtern, Magnetron-Sputtern, Ionenstrahl-Sputtern usw., Ionenplattieren mittels DC-, RF-, HCD-Methoden, Reaktiv-Ionenplattieren usw. oder chemischer Gasphasenabscheidung eine Beschichtung erfolgen. Ferner kann eine Antireflexbeschichtung auch aus Lösung aufgebracht werden. So kann über eine Dispersion eines Metalloxids mit hohen Brechungsindex wie ZrO₂, TiO₂ Sb₂O₅ oder WO₃ in einen Silicon-basierten Lack eine entsprechende Beschichtungslösung hergestellt werden, welche zur Beschichtung von Kunstoffartikeln geeignet ist und thermisch oder UV-gestützt ausgehärtet werden kann.

Es sind verschiedene Methoden bekannt, um eine Kratzfestbeschichtung auf Kunststoffartikeln herzustellen. Beispielsweise können Epoxy-, Acryl-, Polysiloxan-, kolloidales Kieselgel-, oder anorganisch/organisch (Hybridsysteme) basierte Lacke verwendet werden. Diese Systeme können über beispielsweise über Tauchverfahren, Spincoating, Sprühverfahren, oder Fließbeschichtung aufgebracht werden. Die Aushärtung kann thermisch oder mittels UV-Bestrahlung erfolgen. Es können Ein- oder Mehrschichtsysteme verwendet werden. Die Kratzfestbeschichtung kann z.B. direkt oder nach Vorbereitung der Substratoberfläche mit einer Grundierung (Primer) aufgetragen werden. Ferner kann eine Kratzfestbeschichtung über Plasma-gestützte Polymerisationsverfahren aufgebracht werden, z.B. über ein SiO₂-Plasma. Antibeschlags- oder Antireflex-Beschichtungen können ebenfalls über Plasmaverfahren hergestellt werden. Weiterhin ist es möglich, über bestimmte Spritzgussverfahren, wie z.B. das Hinterspritzen von oberflächenbehandelten Folien, eine Kratzfestbeschichtung auf den resultierenden Formkörper aufzubringen. In der Kratzfestschicht können verschiedene Additive, wie z.B. UV-Absorber, abgeleitet z.B. von Triazolen oder Triazinen, vorhanden sein. Ferner können IR-Absorber organischer oder anorganischer Natur enthalten sein. Diese Additive können im Kratzfestlack selbst oder in der Primerschicht enthalten sein. Die Dicke der Kratzfestschicht beträgt 1 - 20 µm, bevorzugt 2 - 15 µm. Unterhalb von 1 µm ist die Beständigkeit der Kratzfestschicht ungenügend. Oberhalb von 20 µm treten häufiger Risse im Lack auf. Das erfindungsgemäße Basismaterial, welches in der vorliegenden Erfindung beschrieben wird, wird bevorzugt nach Fertigstellung des Spritzgussartikels mit einer oben beschriebenen Kratzfest- und/oder Antireflexschicht versehen, da der bevorzugte Einsatzbereich im Bereich von Fenster- oder- Automobilverscheibung liegt.

Für Polycarbonate wird bevorzugt ein UV-Absorber enthaltener Primer eingesetzt, um die Haftung des Kratzfestlackes zu verbessern. Der Primer kann weitere Stabilisatoren wie z.B. HALS-Systeme (Stabilisatoren auf Basis sterisch gehinderter Amine), Haftvermittler, Fließhilfsmittel enthalten. Das jeweilige Harz kann aus einer Vielzahl von Materialien ausgewählt werden und ist z.B. in Ullmann's Encylopedia of Industrial Chemistry, 5th Edition, Vol. A18, pp. 368-426, VCH, Weinheim 1991 beschrieben. Es können Polyacrylate, Polyurethane, Phenol-basierte, Melaminbasierte, Epoxy- und Alkyd-Systeme oder Mischungen dieser Systeme eingesetzt werden. Das Harz wird meist in geeigneten Lösemitteln gelöst - häufig in Alkoholen. Abhängig vom gewählten Harz kann die Aushärtung bei Raumtemperatur oder bei erhöhten Temperaturen erfolgen. Bevorzugt werden Temperaturen zwischen 50 °C und 130 °C eingesetzt - häufig nach dem ein Großteil des Lösemittels kurzzeitig bei Raumtemperatur entfernt wurde. Kommerziell erhältliche Systeme sind z.B. SHP470, SHP470FT2050 und SHP401 der Firma Momentive Performance Materials. Derartige Beschichtungen sind z.B. in US 6350512 B1, US 5869185, EP 1308084, WO 2006/108520 beschrieben.

Kratzfest-Lacke (Hard-Coat) sind bevorzugt aus Siloxanen aufgebaut und enthalten bevorzugt UV-.Absorber. Sie werden bevorzugt über Tauch- oder Fließverfahren aufgebracht. Die Aushärtung erfolgt bei Temperaturen von 50 °C - 130 °C. Kommerziell erhältliche Systeme sind z.B. AS4000, SHC5020 und AS4700 von Momentive Performance Materials. Derartige Systeme sind z.B. in US 5041313, DE 3121385, US 5391795, WO 2008/109072 beschrieben. Die Synthese dieser Materialien erfolgt meist über Kondensation von Alkoxy- und/oder Alkylakoxysilanen unter Säure-oder Basenkatalyse. Optional können Nanopartikel eingearbeitet werden. Bevorzugte Lösemittel sind Alkohole wie Butanol, Isopropanol, Methanol, Ethanol und deren Mischungen.

Anstatt von Primer / Kratzfestbeschichtungs-Kombinationen können Einkomponenten-Hybrid-Systeme eingesetzt werden Diese sind z.B. in EP0570165 oder WO 2008/071363 oder DE 2804283 beschrieben. Kommerziell erhältlich Hybrid-Systeme sind z.B. unter den Namen PHC587 oder UVHC 3000 von Momentive Performance Materials erhältlich.

### Beispiele

Im Folgenden wird die Erfindung anhand von Ausführungsbeispielen näher beschrieben, wobei die hier beschriebenen Bestimmungsmethoden für alle korrespondierenden Größen in der vorliegenden Erfindung zur Anwendung kommen, sofern nichts Gegenteiliges beschrieben worden ist.

Die Bestimmung des Schmelzvolumenrate (MVR) erfolgt nach ISO 1133 (bei 300 °C; 1,2 kg).

### Messung des Streueffektes:

Die Messung der Farbe erfolgt in Reflexion und wird wie folgt durchgeführt:
Der Prüfkörper wird unter 60° Einfallswinkel gegenüber der Vertikalen mit einer weißen Punktlichtquelle beleuchtet und unter 30° bis -80° Ausfallswinkel gegenüber der Vertikalen wird die Streuung gemessen und die CIELAB Farbkoordinaten L*, a*, b* mit Lichtart D65 und 10°-Beobachter (Vgl. FIG.1) nach ASTME 308 berechnet. Dieses Farbsystem ist z.B. in Manfred Richter: Einführung in die Farbmetrik. 1984 ISBN 3-11-008209-8 beschrieben. Für die Evaluation der Farbe wird der b* Wert bei 10°-Beobachter verwendet (im weiteren b* (60°) genannt).

Die Messungen wurden mit einem Goniophotometer "Gon360-105" (Gon360 mit Simultanspektrometer CAS 140) der Firma Instrument Systems durchgeführt.

### Hemisphärische Reflexion (b* hemisphärisch)

Die hemisphärische Reflexion des Prüfkörpers nach ASTM E 1331 gemessen und die CIELAB Farbkoordinaten L*, a*, b* mit Lichtart D65 und 10°-Beobachter nach ASTM E 308 berechnet. In der Tabelle ist der entsprechende b*(hemisphärisch)-Wert angegeben.

### Δb*: Absolutwert des Unterschieds von b* (60°) und b* (hemisphärisch).

Bestimmung des T_{DS}-Wertes (Direct Solar Transmittance):
Die Transmissions- und Reflexionsmessungen wurden an einem Perkin Elmer Lambda 900 Spektralphotometer mit Photometerkugel durchgeführt (d.h. Bestimmung der Gesamttransmission sowohl durch Messung der diffusen und direkten Transmission als auch der diffusen und direkten Reflektion). Alle Werte wurden von 320 nm bis 2300 nm bestimmt.

Die Berechnung der Gesamttransmission T_{DS} wurde nach ISO 13837, computational convention "A" durchgeführt.

### Visuelle Lichtttransmission/Trübung:

Die Transmissionsmessungen wurden an einem Perkin Elmer Lambda 900 Spektralphotometer mit Photometerkugel durchgeführt (d.h. Bestimmung der Gesamttransmission sowohl durch Messung der diffusen und direkten Transmission als auch der diffusen und direkten Reflektion).gemäß ASTM D1003.

### Materialien:

Zur Herstellung der Probekörper wird additivfreies Polycarbonat, Makrolon 3108 von Bayer MaterialScience (lineares Bisphenol A Polycarbonat), mit einer Schmelze-Volumenrate (MVR) von 6 cm³/10 min bei 300 °C und 1,2 kg Belastung gemäß ISO 1033.

Zur Herstellung der Probekörper wird Polycarbonat, Makrolon AL2647 der Firma Bayer MaterialScience (lineares Polycarbonat auf Basis von Bisphenol A), mit einem MVR von 12,5 cm³/10 min. bei 300 °C und 1,2 kg Belastung gemäß ISO 1033. Dieses Polycarbonat enthält UV-Absorber, Entformungsmittel und Thermostabilisator.

Als IR-Absorber wird Lanthanhexaborid, LaB6 (KHDS 06 der Firma Sumitomo Metal Mining, Japan), eingesetzt. Das Produkt liegt in Form einer Dispersion vor. Die Gewichtsangaben in den Beispielen beziehen sich auf das Lanthanhexaborid als Reinstoff, wobei der Feststoffgehalt an Lanthanhexaborid in der eingesetzten kommerziellen KHDS06-Dispersion 21,5 Gew.-% beträgt.

Als nanoskaliger Ruß (Partikelgröße ca. 17 nm) werden Black Pearls® 800 der Firma Cabot Corp. eingesetzt.

Als Farbmittel der Formel (1) bzw. (2) wird soweit verwendet hier Makrolex Rot EG der Firma Lanxess Deutschland GmbH eingesetzt

Als weiteres Farbmittel wird Antharchinon-basiertes Macrolex Blau RR. der Firma Lanxess Deutschland GmbH eingesetzt. Ein weiteres eingesetztes Farbmittel ist Heliogen Blau K 6911D der Firma BASF SE, 67065 Ludwigshafen, Deutschland.

### Compoundierung:

Die Compoundierung der Additive erfolgte auf einem Zweiwellenextruder der Firma KrausMaffei Berstorff TYP ZE25 bei einer Gehäusetemperatur von 260°C bzw. einer Massetemperatur von 270°C und einer Drehzahl von 100 Upm mit der in Tabelle 1 angegebenen Mengen an Additiven.

### Prüfkörper:

Das Granulat wird bei 120 °C für 3 Stunden im Vakuum getrocknet und anschließend auf einer Spritzgussmaschine vom Typ Arburg 370 mit einer 25-Spritzeinheit bei einer Massetemperatur von 300°C und einer Werkzeugtemperatur von 90 °C zu Farbmusterplatten mit den Abmessungen 60 mm x 40 mm x 4 mm verarbeitet.

### Beispiel 1 (Vergleichsbeispiel)

Makrolon^{®} 3108 wird ohne weitere Additive wie oben beschrieben compoundiert. Die Ergebnisse der Reflexionsmessung sind in Tabelle 1 aufgeführt.

### Beispiel 2 (Vergleichsbeispiel)

Makrolon^{®} 3108 wird mit 0,00086 Gew.-% Lanthanhexaborid, LaB6, (entspricht 0,004 Gew.-% KHDS 06-Dispersion) wie oben beschrieben compoundiert. Die Ergebnisse der Reflexionsmessung sind in Tabelle 1 aufgeführt.

### Beispiel 3 (Vergleichsbeispiel)

Makrolon^{®} 3108 wird mit 0,00108 Gew.-% Lanthanhexaborid, LaB6, (entspricht 0,005 Gew.-% KHDS 06-Dispersion) wie oben beschrieben compoundiert. Die Ergebnisse der Reflexionsmessung sind in Tabelle 1 aufgeführt.

### Beispiel 4 (Vergleichsbeispiel)

Makrolon^{®} 3108 wird mit 0,00215 Gew.-% Lanthanhexaborid, LaB6, (entspricht 0,01 Gew.-% KHDS 06-Dispersion) wie oben beschrieben compoundiert. Die Ergebnisse der Reflexionsmessung sind in Tabelle 1 aufgeführt.

### Beispiel 5 (Vergleichsbeispiel)

Makrolon^{®} 3108 wird mit 0,00430 Gew.-% Lanthanhexaborid, LaB6, (entspricht 0,02 Gew.-% KHDS 06-Dispersion) wie oben beschrieben compoundiert. Die Ergebnisse der Reflexionsmessung sind in Tabelle 1 aufgeführt.

### Beispiel 6 (Vergleichsbeispiel)

Makrolon^{®} 3108 wird mit 0,01075 Gew.-% Lanthanhexaborid, LaB6, (entspricht 0,05 Gew.-% KHDS 06-Dispersion) wie oben beschrieben compoundiert. Die Ergebnisse der Reflexionsmessung sind in Tabelle 1 aufgeführt.

### Beispiel 7 (Vergleichsbeispiel)

Makrolon^{®} 3108 wird mit 0,02150 Gew.-% Lanthanhexaborid, LaB6, (entspricht 0,1 Gew.-% KHDS 06-Dispersion) wie oben beschrieben compoundiert. Die Ergebnisse der Reflexionsmessung sind in Tabelle 1 aufgeführt.

### Beispiel 8 (Vergleichsbeispiel)

Makrolon^{®} 3108 wird mit 0,00430 Gew.-% Lanthanhexaborid, LaB6, (entspricht 0,02 Gew.-% KHDS 06-Dispersion) sowie 0,0003 Gew.-% nanoskaliger Ruß wie oben beschrieben compoundiert. Die Ergebnisse der Reflexionsmessung sind in Tabelle 1 aufgeführt.

### Beispiel 9 (Vergleichsbeispiel)

Makrolon^{®} 3108 wird mit 0,00430 Gew.-% Lanthanhexaborid, LaB6, (entspricht 0,02 Gew.-% KHDS 06-Dispersion) sowie 0,004 Gew.-% nanoskaliger Ruß wie oben beschrieben compoundiert. Die Ergebnisse der Reflexionsmessung sind in Tabelle 1 aufgeführt.

### Beispiel 10 (Erfindungsgemäß)

Makrolon^{®} 3108 wird mit 0,00430 Gew.-% Lanthanhexaborid, LaB6, (entspricht 0,02 Gew.-% KHDS 06-Dispersion) sowie 0,0025 Gew.-% nanoskaliger Ruß wie oben beschrieben compoundiert. Die Ergebnisse der Reflexionsmessung sind in Tabelle 1 aufgeführt.

### Beispiel 11 (Vergleichsbeispiel)

Makrolon^{®} AL2647 wird mit 0,00667 Gew.-% Lanthanhexaborid, LaB6, (entspricht 0,031 Gew.-% KHDS 06-Dispersion) sowie 0,0005 Gew.-% nanoskaliger Ruß und als Farbmittel 0,0055 Gew.-% Macrolex Rot EG, 0,0039 Gew.-% Macrolex Blau RR, und 0,0013 Heliogen Blau K6911D wie oben beschrieben compoundiert. Die Ergebnisse der Reflexionsmessung sind in Tabelle 2 aufgeführt.

### Beispiel 12 (Erfindungsgemäß)

Makrolon^{®} AL2647 wird mit 0,00667 Gew.-% Lanthanhexaborid, LaB6, (entspricht 0,031 Gew.-% KHDS 06-Dispersion) sowie 0,00167 Gew.-% nanoskaliger Ruß und als Farbmittel 0,0055 Gew. % Macrolex Rot EG, 0,0039 Gew.-% Macrolex Blau RR, und 0,0013 Gew.-% Heliogen Blau K6911D wie oben beschrieben compoundiert. Die Ergebnisse der Reflexionsmessung sind in Tabelle 2 aufgeführt.

### Beispiel 13 (Vergleichsbeispiel)

Makrolon^{®} AL2647 wird mit 0,00452 Gew.-% Lanthanhexaborid, LaB6, (entspricht 0,021 Gew.-% KHDS 06-Dispersion) sowie 0,0005 Gew.-% nanoskaliger Ruß und als Farbmittel 0,0048 Gew.-% Macrolex Rot EG, 0,0037 Gew.-% Macrolex Blau RR und 0,0011 Gew.-% Heliogen Blau K6911D wie oben beschrieben compoundiert. Die Ergebnisse der Reflexionsmessung sind in Tabelle 2 aufgeführt.

### Beispiel 14 (Erfindungsgemäß)

Makrolon^{®} AL2647 wird mit 0,00452 Gew.-% Lanthanhexaborid, LaB6, (entspricht 0,021 Gew.-% KHDS 06-Dispersion) sowie 0,00225 Gew.-% nanoskaliger Ruß und als Farbmittel 0,0048 Gew. % Macrolex Rot EG, 0,0037 Gew.-% Macrolex Blau RR und 0,0011 Gew.-% Heliogen Blau K6911D wie oben beschrieben compoundiert. Die Ergebnisse der Reflexionsmessung sind in Tabelle 2 aufgeführt.

**Tabelle 1: Veränderung des Streueffektes durch verschiedene IR-Absorber / Ruß-Kombinationen**

| Beispiel-Nr. | LaB6 [Gew.-%] | Nanoskaliger Ruß [Gew.-%] | b* (60°) | b* (hemisphärisch) | Δ b* | T_{DS} [%] | Lichttransmission [%] |
|---|---|---|---|---|---|---|---|
| 1 (Vergleich) | - | - | -0,6 | -0,4 | *0,2* | *84,8* | *88,9* |
| 2 (Vergleich) | 0,00086 | - | -2,7 | -0,4 | *2,3* | *76,4* | *84,4* |
| 3 (Vergleich) | 0,00108 | - | -3,2 | 0 | *3,2* | *67,4* | *82,5* |
| 4 (Vergleich) | 0,00215 | - | -4,8 | 0,4 | *5,2* | *54,0* | *75,5* |
| 5 (Vergleich) | 0,00430 | - | -6,7 | 0,3 | *7,0* | *36,5* | *62,6* |
| 6 (Vergleich) | 0,01075 | - | -7,5 | -1,6 | *5,9* | *14,8* | *35,8* |
| 7 (Vergleich) | 0,02150 | - | -8,0 | -3,4 | *4,6* | *5,0* | *14,8* |
| 8 (Vergleich) | 0,00430 | 0,00030 | -5,6 | 0,1 | *5,7* | *31,0* | *53,0* |
| 9 (Vergleich) | 0,00430 | 0,00400 | -1,4 | -1,5 | *0.1* | *6,4* | *5,7* |
| 10 (Erfindungsgemäß) | 0,00430 | 0,00250 | -2,2 | -1,6 | *0,6* | *11.0* | *14,6* |

Aus den Beispielen 2 - 7 ist ersichtlich, dass der von den IR-Absorber Partikeln hervorgerufene Streueffekt mit der Konzentration an Lanthanhexaborid stark ansteigt. Beispiel 8 zeigt, dass niedrige Mengen an Ruß nicht dazu geeignet sind, den b* (60°)-Wert deutlich in Richtung 0 bzw. in einen Bereich von 0 bis -2,5 zu verschieben. Ferner liegt der Δb* -Wert deutlich oberhalb von 1 und ist somit für den Betrachter deutlich sichtbar. Beispiel 10 zeigt, dass erst höhere Mengen an Ruß den erwünschten Effekt zeigen. Ferner ist der Unterschied der durch den Streueffekt hervorgerufenen bläulichen Schimmer und der reflektierten Eigenfarbe nicht mehr erkennbar (Δb* ist kleiner als 1). Zu hohe Konzentrationen an nanoskaligem Ruß, wie in Beispiel 9 gezeigt, vermindern drastisch die Transmission und sind für transparente Formkörper nicht geeignet. Überraschend zeigt sich auch, dass der für das Maß der Streuung verantwortliche b*-Wert (b* (60°)) einen anderen Verlauf nimmt als die reflektierte Eigenfarbe (b* (hemisphärisch)).

**Tabelle 2: Spezielle Farbeinstellungen**

| | Bsp. 11 | Bsp. 12 | Bsp. 13 | Bsp. 14 |
|---|---|---|---|---|
| | Vergleich | Erfindungsgemäß | Vergleich | Erfindungsgemäß |
| Macrolex Rot EG [Gew.-%] | 0,00550 | 0,00550 | 0,00480 | 0,00480 |
| Macrolex Blau RR [Gew.-%] | 0,00390 | 0,00390 | 0,00370 | 0,00370 |
| Heliogen Blau K 6911D [Gew.-%] | 0,00130 | 0,00130 | 0,00110 | 0,00110 |
| Nanosk. Ruß [Gew.-%] | 0,00050 | 0,00167 | 0,00050 | 0,00225 |
| LaB6 [Gew.-%] | 0,00667 | 0,00667 | 0,00452 | 0,00452 |
| Transmission Ty | 20,1 | 8,1 | 25,5 | 7,8 |
| b* in Reflexion | -3,2 | -1,7 | -3,2 | -1,3 |
| b* in Reflexion, hemisphärisch | -3,1 | -2,3 | -3,2 | -2,0 |
| Δb* | 0,1 | 0,6 | 0,0 | 0,7 |
| T_{DS}[%] | 14,1 | 6,0 | 20,6 | 7,7 |

Auch in den Farbrezepturen ist der Streueffekt der IR-Absorberpartikel zu erkennen. Durch die erfindungsgemäßen Konzentrationen an nanoskaligem Pigment, wie in den Beispielen 12 und 14 gezeigt, gelingt es, den Streueffekt (was durch die signifikante Zunahme von b* (60°) in Reflexion zu erkennen ist, d.h. b* bewegt sich in Richtung 0) zu verringern. Auch wenn der Δb* sich für die Beispiele 11 - 14 im Bereich von 0 - 1 (d.h. blauer Anteil der Eigenfarbe nicht von dem Anteil des Streueffekts unterscheidbar) liegt, ist die Farbe der Vergleichsbeispiele mit einem b*(60°) außerhalb des gewünschten Bereichs für ein neutrales grau nicht akzeptabel.

## Patentansprüche

1. Fertigteil aus einer Polymer-Zusammensetzung, enthaltend
a. Polycarbonat,
b. mindestens einen anorganischen IR Absorber aus der Gruppe der Boridverbindungen mit einer Durchschnittsgröße der Partikel der Boridverbindungen kleiner als 200 nm und größer als 5 nm in einem Anteil von 0,00270 Gew.% - 0,00800 Gew.% berechnet als Feststoffanteil an Borid in der Polymergesamtzusammensetzung und
c. nanoskaligen Ruß in einem Anteil von 0,00090 Gew.% - 0,00300 Gew.% bezogen auf die Gesamtzusammensetzung und
d. optional weitere Additive,
wobei das Fertigteil eine Dicke von 3,5 bis 7,0 mm aufweist.

2. Fertigteil nach Anspruch 1, **dadurch gekennzeichnet, daß** das Verhältnis von b) zu c) 20 : 1 bis 0,4 : 1 beträgt.

3. Fertigteil nach Anspruch 1, **dadurch gekennzeichnet, daß** das Verhältnis von b) zu c) 5 : 1 bis 1,5 : 1 beträgt.

4. Fertigteil nach Anspruch 1, **dadurch gekennzeichnet, daß** der Infrarotabsorber ausgewählt ist aus der Gruppe, die anorganische IR Absorber aus der Gruppe der Boridverbindungen vom Typ MxBy mit M = La, Ce, Pr, Nd, Tb, Dy, Ho, Y, Sm, Eu, ER, Tm, Yb, Lu, Sr, Ti, Zr, Hf, V, Ta, Cr, Mo, W und Ca.

5. Fertigteil nach Anspruch 1, **dadurch gekennzeichnet, daß** der Infrarotabsorber LaB₆ ist.

6. Fertigteil nach Anspruch 1, **dadurch gekennzeichnet, daß** das nanoskalige Pigment ein Ruß mit einer mittleren Teilchengröße von < 100 nm ist.

7. Fertigteil nach Anspruch 1, **dadurch gekennzeichnet, daß** die Zusammensetzung zusätzlich Triphenylphosphin als Stabilisator zur Stabilisierung des IR-Absorbers enthält.

8. Fertigteil nach Anspruch 1, **dadurch gekennzeichnet, dass** Komponente d) ausgewählt ist aus der Gruppe, die Ultraviolett-Absorber, Farbmittel, Entformer, Flammschutzmittel und Thermostabilisatoren enthält.

9. Fertigteil nach Anspruch 1 mit einem b* (60°) Wert von -2,5 bis 0,0.

10. Verwendung eines nanoskaligen Rußes in einem Anteil von 0,00090 Gew.% - 0,00300 Gew.%, bezogen auf die Gesamtzusammensetzung, zur Verminderung von Streuungen in einer Polycarbonat-Zusammensetzung, hervorgerufen durch nanoskalige Teilchen aus der Gruppe der Boridverbindungen mit einer Durchschnittsgröße der Partikel der Boridverbindungen kleiner als 200 nm und größer als 5 nm_in einem Anteil von 0,00270 Gew.% - 0,00800 Gew.%, berechnet als Feststoffanteil an Borid in der Polycarbonat-Zusammensetzung.

## Claims

1. Finished part made of a polymer composition, comprising
a. polycarbonate,
b. a proportion of from 0.00270% by weight to 0.00800% by weight, calculated as solids content of boride in the entire polymer composition, of at least one inorganic IR absorber from the group of the boride compounds with average particle size of the boride compounds smaller than 200 nm and greater than 5 nm and
c. a proportion of 0.00090% by weight to 0.00300% by weight, based on the entire composition, of nanoscale carbon black and
d. optionally other additives,
where the thickness of the finished part is from 3.5 to 7.0 mm.

2. Finished part according to Claim 1, **characterized in that** the ratio of b) to c) is from 20:1 to 0.4:1.

3. Finished part according to Claim 1, **characterized in that** the ratio of b) to c) is from 5:1 to 1.5:1.

4. Finished part according to Claim 1, **characterized in that** the infrared absorber is selected from the group comprising inorganic IR absorbers from the group of the boride compounds of MxBy type, where M = La, Ce, Pr, Nd, Tb, Dy, Ho, Y, Sm, Eu, Er, Tm, Yb, Lu, Sr, Ti, Zr, Hf, V, Ta, Cr, Mo, W and Ca.

5. Finished part according to Claim 1, **characterized in that** the infrared absorber is LaB₆.

6. Finished part according to Claim 1, **characterized in that** the nanoscale pigment is a carbon black with average particle size < 100 nm.

7. Finished part according to Claim 1, **characterized in that** the composition also comprises triphenylphosphine as stabilizer to stabilize the IR absorber.

8. Finished part according to Claim 1, **characterized in that** component d) is selected from the group comprising ultraviolet absorbers, colorants, mould-release agents, flame retardants and heat stabilizers.

9. Finished part according to Claim 1 with b* (60°) value from -2.5 to 0.0.

10. Use of a proportion of from 0.00090% by weight to 0.00300% by weight, based on the entire composition, of a nanoscale carbon black to reduce scattering in a polycarbonate composition, brought about by a proportion of from 0.00270% by weight to 0.00800% by weight, calculated as solids content of boride in the polycarbonate composition, of nanoscale particles from the group of the boride compounds with average particle size of the boride compounds smaller than 200 nm and greater than 5 nm.

## Revendications

1. Élément préfabriqué en une composition polymère, contenant :
a. un polycarbonate,
b. au moins un absorbant IR inorganique du groupe des composés de borure, d'une taille moyenne des particules des composés de borure inférieure à 200 nm et supérieure à 5 nm, en une proportion de 0,00270 % en poids à 0,00800 % en poids, calculée en tant que proportion de solides de borure dans la composition polymère totale, et
c. du noir de carbone nanométrique en une proportion de 0,00090 % en poids à 0,00300 % en poids, par rapport à la composition totale, et
d. éventuellement des additifs supplémentaires, l'élément préfabriqué présentant une épaisseur de 3,5 à 7,0 mm.

2. Élément préfabriqué selon la revendication 1, **caractérisé en ce que** le rapport entre b) et c) est de 20:1 à 0,4:1.

3. Élément préfabriqué selon la revendication 1, **caractérisé en ce que** le rapport entre b) et c) est de 5:1 à 1,5:1.

4. Élément préfabriqué selon la revendication 1, **caractérisé en ce que** l'absorbant infrarouge est choisi dans le groupe qui comprend des absorbants IR inorganiques du groupe des composés de borure de type MxBy avec M = La, Ce, Pr, Nd, Tb, Dy, Ho, Y, Sm, Eu, Er, Tm, Yb, Lu, Sr, Ti, Zr, Hf, V, Ta, Cr, Mo, W et Ca.

5. Élément préfabriqué selon la revendication 1, **caractérisé en ce que** l'absorbant infrarouge est LaB₆.

6. Élément préfabriqué selon la revendication 1, **caractérisé en ce que** le pigment nanométrique est un noir de carbone d'une taille de particule moyenne < 100 nm.

7. Élément préfabriqué selon la revendication 1, **caractérisé en ce que** la composition contient en outre de la triphénylphosphine en tant que stabilisateur pour la stabilisation de l'absorbant IR.

8. Élément préfabriqué selon la revendication 1, **caractérisé en ce que** le composant d) est choisi dans le groupe contenant les absorbants ultraviolets, les colorants, les démoulants, les agents ignifuges et les thermostabilisateurs.

9. Élément préfabriqué selon la revendication 1, présentant une valeur b* (60°) de -2,5 à 0,0.

10. Utilisation d'un noir de carbone nanométrique en une proportion de 0,00090 % en poids à 0,00300 % en poids, par rapport à la composition totale, pour réduire les diffusions dans une composition de polycarbonate causées par des particules nanométriques du groupe des composés de borure d'une taille moyenne des particules des composés de borure inférieure à 200 nm et supérieure à 5 nm en une proportion de 0,00270 % en poids à 0,00800 % en poids, calculée en tant que proportion de solides de borure dans la composition de polycarbonate.
